# EUROPEAN PATENT APPLICATION

(11) **EP 4 510 703 A1**
(43) Date of publication of application: **19.02.2025**
(21) Application number: 22936838.6
(22) Date of filing: 12.04.2022
(51) Int. Cl.: H04W 36/06

(54) **IAB DONOR DEVICE AND TRANSMISSION ADDRESS CONFIGURATION METHOD**

(71) Applicant: FUJITSU LIMITED, Kawasaki-shi, Kanagawa 211-8588 (JP)
(72) Inventor: LU, Yang, Beijing 100022 (CN); YI, Su, Beijing 100022 (CN)
(74) Representative: Haseltine Lake Kempner LLP
(86) International application number: PCT/CN2022/086454
(87) International publication number: WO 2023/197184

(57) **Abstract**

Embodiments of this disclosure provide an IAB-donor device and a transport address configuration method. The IAB-donor device includes: a first transmitting portion configured to transmit IP address request information of a non-F 1-terminating topology domain for the IAB node to a non-F1-terminating donor, and/or, transmit IP address configuration information of an F1-terminating topology domain allocated for the IAB node to the non-F1-terminating donor; and/or, a first receiving portion configured to receive IP address configuration information of the non-F1-terminating topology domain allocated for the IAB node transmitted by the non-F1-terminating donor.

## Description

### Technical Field

This disclosure relates to the field of communication technologies.

### Background

Seamless cellular network deployment in the future needs very flexible and ultra-dense new radio (NR) cell deployment. The ultra-dense network is one of goals of 5G, and deployment of an NR network with no wired backhaul is very important for the realization of 5G ultra-dense network. As coverage of a cell is reduced by a 5G millimeter wave, it is further needed that a wireless self-backhauling system is of multi-hop to meet deployment requirements. High bandwidth, large-scale MIMO and beam system of 5G make it easier for 5G to develop the wireless self-backhauling system of ultra-dense NR cells than LTE. In order to develop this multi-hop system with wireless self-backhauling, 3GPP began research and standardization of an IAB (integrated access and backhaul) project in Rel-16.

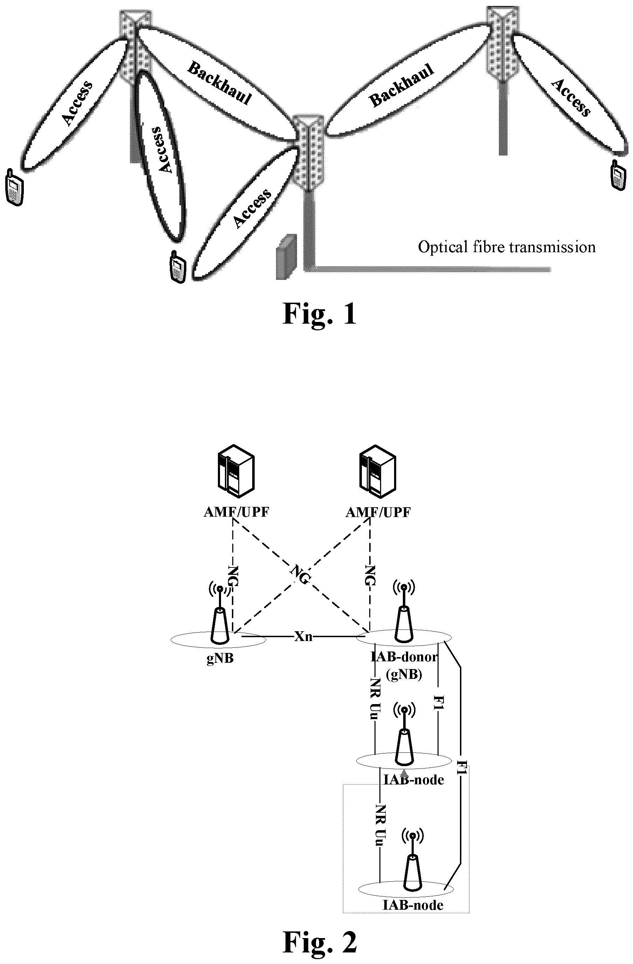

FIG. 1 is a schematic diagram of an IAB system. As shown in FIG. 1, in the IAB system, a relay node supports both access and backhaul functions. A wireless transmission link of the relay node multiplexes an access link and backhaul link in the time domain, frequency domain or spatial domain. The access link and backhaul link may use identical or different frequency bands.

In an IAB network architecture, the relay node refers to an IAB-node, which supports both access and backhaul functions. A prior hop of access node at the network side is referred to as an IAB-donor, which supports a gNB function and supports IAB-node access. All UE data may be backhauled to the IAB-donor in one or more hops via the IAB-node.

Functions of the IAB-node are divided into two parts, one is a gNB-DU function, referred to as an IAB-DU (distribution unit), and the other is a UE function, referred to as an IAB-MT (mobile terminal). The IAB-DU realizes device function at a network side, is connected to a downstream child IAB-node, provides NR air access to the UE and the downstream child IAB-node, and establishes F1 connection with the IAB-donor-CU. The IAB-MT realizes some functions of a terminal equipment and is connected to an upstream parent IAB-node or IAB-donor-DU. The IAB-MT includes physical layer, layer 2, RRC (Radio Resource Control) and NAS (Non-Access Stratum) layer functions, and is further indirectly connected to the IAB-donor-CU and a core network (CN).

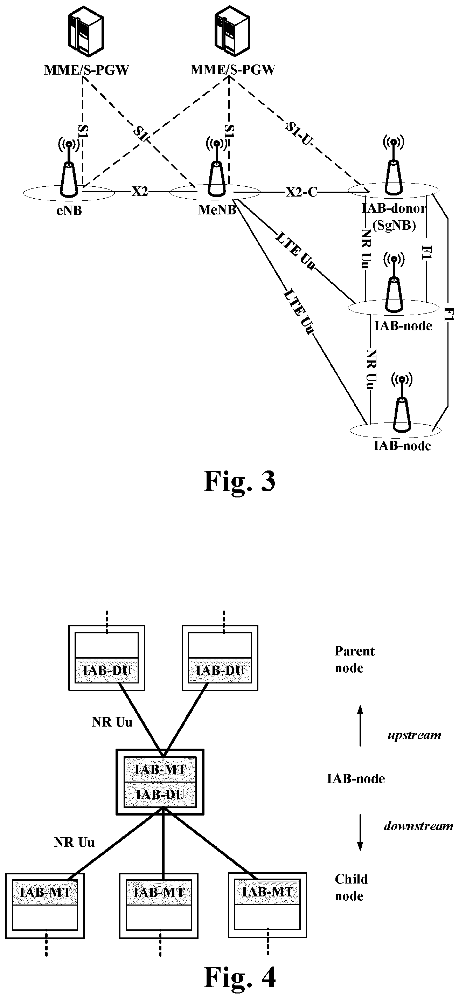

In the IAB system, the IAB-node may access to the network in a standalone (SA) mode or E-UTRA-NR Dual Connectivity (EN-DC) mode. FIG. 2 is a schematic diagram of an IAB architecture of the SA mode. FIG. 3 is a schematic diagram of an IAB architecture of the EN-DC mode.

FIG. 4 is a schematic diagram of an IAB-node, a parent IAB-node and a child IAB-node. As shown in FIG. 4, an IAB-DU of the IAB-node is taken as IAB-MT connection between a network side and the child IAB-node, and an IAB-MT of the IAB-node is taken as a terminal side and connected to the IAB-DU of the parent node.

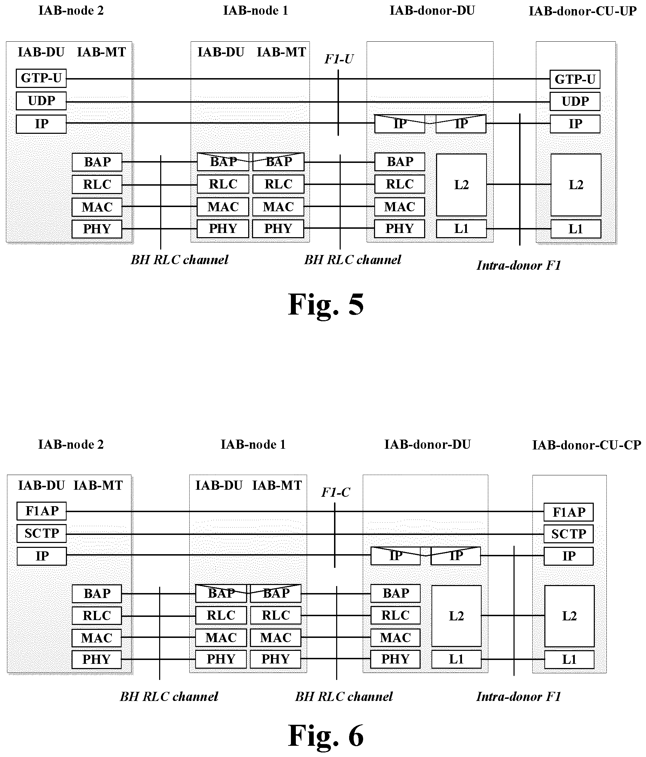

FIG. 5 is a schematic diagram of an F1 user interface (F1-U) protocol stack between the IAB-DU and IAB-donor-CU. FIG. 6 is a schematic diagram of an F1 control plane (F1-C) protocol stack between the IAB-DU and IAB-donor-CU. As shown in FIG. 5 and FIG. 6, the F1-U and F1-C are built on a transmission (IP) layer between the IAB-DU and IAB-donor-CU. Two hops of wireless backhaul and one hop of wired backhaul are performed in FIG. 5 and FIG. 6.

On the backhaul link, the transmission (IP) layer is carried on a backhaul adaptive protocol (BAP) sublayer. A BAP entity in the IAB-node executes a routing function of the IAB system, and the IAB-donor-CU provides a routing table. BAP PDUs (protocol data unit) are transmitted in an RLC (radio link control) channel of the backhaul link, multiple RLC channels of the backhaul link may be configured by the IAB-donor to carry traffics of different priorities and QoS, and the BAP entity maps the BAP PDUs to different backhaul RLC channels.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

It was found by the inventors that if all or a part of traffics of an IAB-node needs to be migrated from an F1-terminating topology domain or configured to a non-F1-terminating topology domain, all routing IDs of the IAB node belongs to the non-F1-terminating topology domain, or, the IAB node both transmit traffics with routing IDs within the F1-terminating topology domain and traffics with routing IDs within the non-F1-terminating topology domain. For the routing IDs of the non-F1-terminating topology domain, the IAB node needs to use an IP address of the non-F 1-terminating topology domain, and for the routing IDs of the F 1-terminating topology domain, the IAB node needs to use an IP address of the F 1-terminating topology domain. A network needs to configure the IAB node with an IP address of a donor-DU anchored at the non-F1-terminating topology domain, or an IP address of a donor-DU anchored at the F1-terminating topology domain. However, there is currently no corresponding solution on how to request an IP address of the non-F1-terminating topology domains, or how to configure an IP address of an F1-terminating domain and an IP address of a non-F1-terminating domain.

In order to solve at least one of the above problems, embodiments of this disclosure provide an IAB-donor device and a transport address configuration method.

According to one aspect of the embodiments of this disclosure, there is provided a transport address configuration method, applicable to an F1-terminating donor device of an IAB node, the method including:
transmitting IP address request information of a non-F1-terminating topology domain for the IAB node by the F 1-terminating donor to a non-F 1-terminating donor, and/or,
receiving, by the F1-terminating donor, IP address configuration information of the non-F 1-terminating topology domain allocated for the IAB node transmitted by the non-F 1-terminating donor; and/or,
transmitting IP address configuration information of the F1-terminating topology domain allocated for the IAB node by the F1-terminating donor to the non-F1-terminating donor.

According to another aspect of the embodiments of this disclosure, there is provided a transport address configuration method, applicable to a non-F 1-terminating donor device of an IAB node, the method including:
receiving, by the non-F1-terminating donor, IP address request information of a non-F 1-terminating topology domain for the IAB node transmitted by an F 1-terminating donor, and/or,
transmitting IP address configuration information of the non-F1-terminating topology domain allocated for the IAB node by the non-F1-terminating donor to the F1-terminating donor; and/or,
receiving, by the non-F1-terminating donor, IP address configuration information of the F 1-terminating topology domain allocated for the IAB node transmitted by the F1-terminating donor.

According to a further aspect of the embodiments of this disclosure, there is provided an IAB-donor device, which is an F1-terminating donor device of an IAB node, the device including:
a first transmitting portion configured to transmit IP address request information of a non-F 1-terminating topology domain for the IAB node to a non-F 1-terminating donor, and/or,
transmit IP address configuration information of an F1-terminating topology domain allocated for the IAB node to the non-F1-terminating donor; and/or,
a first receiving portion configured to receive IP address configuration information of the non-F1-terminating topology domain allocated for the IAB node transmitted by the non-F1-terminating donor.

According to still another aspect of the embodiments of this disclosure, there is provided an IAB-donor device, which is a non-F1-terminating donor device of an IAB node, the device including:
a second receiving portion configured to receive IP address request information of a non-F 1-terminating topology domain for the IAB node transmitted by an F 1-terminating donor, and/or,
receive IP address configuration information of an F1-terminating topology domain allocated for the IAB node transmitted by an F1-terminating donor; and/or,
a second transmitting portion configured to transmit IP address configuration information of the non-F1-terminating topology domain allocated for the IAB node to the F 1-terminating donor.

According to yet another aspect of the embodiments of this disclosure, there is provided a communication system, including an IAB-donor device described above.

An advantage of the embodiments of this disclosure exists in that the F 1-terminating donor may request the non-F1-terminating donor for allocating the IP address of the non-F1-terminating topology domain, or further receive the IP address configuration information of the non-F 1-terminating topology domain allocated by the non-F1-terminating donor for the IAB node, so that the F1-terminating donor may request for the IP address of the non-F1-terminating topology domain, or further transmit the IP address of the non-F1-terminating topology domain for the IAB node, such as in a case where the non-F1-terminating donor is unable to transmit a message for the IAB node. F1-terminating donor may receive the IP address configuration information of the non-F1-terminating topology domain transmitted actively by the non-F1-terminating donor for the IAB node, so that transmitting the IP address of the non-F1-terminating topology domain to the IAB node, such as in a case where the non-F1-terminating donor is unable to transmit a message for the IAB node. Furthermore, the F 1-terminating donor may transmit the IP address configuration information of the F1-terminating topology domain to the non-F1-terminating donor, so that the non-F1-terminating donor may transmit the IP address of the F1-terminating topology domain to the IAB node, such as in a case where the F 1-terminating donor is unable to transmit a message to the IAB node. Hence, for the routing IDs of the non-F1-terminating topology domain, the IAB node may use the IP address of the non-F1-terminating topology domain, and for the routing IDs of the F 1-terminating topology domain, the IAB node may use the IP address of the F 1-terminating topology domain.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/comprising/including/include" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is schematic diagram of an IAB system;
FIG. 2 is a schematic diagram of an IAB architecture in an SA mode;
FIG. 3 is a schematic diagram of an IAB architecture in an EN-DC mode;
FIG. 4 is a schematic diagram of a parent IAB node and a child IAB node;
FIG. 5 is a schematic diagram of an F1-U protocol stack of the IAB system;
FIG. 6 is a schematic diagram of an F1-C protocol stack of the IAB system;
FIG. 7 is a schematic diagram of IAB system routing;
FIG. 8 is a schematic diagram of network topology adaptation;
FIG. 9 is a schematic diagram of an IAB-donor device of embodiments of this disclosure;
FIG. 10 is a schematic diagram of a transport address configurating method of embodiments of this disclosure;
FIG. 11 is a schematic diagram of a handover scenario;
FIG. 12 is a schematic diagram of a transport address configurating method of embodiments of this disclosure;
FIG. 13 is a schematic diagram of dual-connectivity scenario 1;
FIG. 14 is a schematic diagram of a transport address configurating method of embodiments of this disclosure;
FIG. 15 is a schematic diagram of a transport address configurating method of embodiments of this disclosure;
FIG. 16 is a schematic diagram of a transport address configurating method of embodiments of this disclosure;
FIG. 17 is a schematic diagram of dual-connectivity scenario 2;
FIG. 18 is a schematic diagram of a transport address configurating method of embodiments of this disclosure;
FIG. 19 is a schematic diagram of a transport address configurating method of embodiments of this disclosure;
FIG. 20 is a schematic diagram of an RLF recovery scenario;
FIG. 21 is a schematic diagram of a transport address configurating method of embodiments of this disclosure;
FIG. 22 is a schematic diagram of a transport address configurating method of embodiments of this disclosure;
FIG. 23 is a schematic diagram of a transport address configurating method of embodiments of this disclosure;
FIG. 24 is a schematic diagram of a transport address configurating method of embodiments of this disclosure;
FIG. 25 is a schematic diagram of a transport address configurating method of embodiments of this disclosure;
FIG. 26 is a schematic diagram of a transport address configurating method of embodiments of this disclosure;
FIG. 27 is a schematic diagram of a transport address configurating method of embodiments of this disclosure;
FIG. 28 is a schematic diagram of a transport address configurating method of embodiments of this disclosure;
FIG. 29 is a schematic diagram of an IAB-donor device of embodiments of this disclosure; and
FIG. 30 is a schematic diagram of an IAB-donor device of embodiments of this disclosure.

### Detailed Description of the Disclosure

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and 6G in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following equipment: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" refers to, for example, an equipment accessing to a communication network and receiving network services via a network device, and may also be referred to as "a terminal equipment (TE)". The terminal equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

Signaling radio bearers (SRBs) include SRB0, SRB1, SRB2, and SRB3, etc., wherein SRB0, SRB1 and SRB2 lead to an MN, and SRB3 leads to an SN. The signaling radio bearers are radio bearers used to transmit RRC and NAS messages. SRB0 transmits an RRC message using a common control channel (CCCH) logical channel. SRB1 transmits an RRC message (which may include a piggybacked NAS message) and an NAS message before SRB2 is set up, and uses a dedicated control channel (DCCH) logical channel. SRB2 transmits an NAS message and an RRC message containing a log measurement message, and uses a DCCH logical channel. SRB2 has a lower priority than SRB 1 and may be configured by the network after an access stratum (AS) is securely activated. And SRB3 is used for a specific RRC message when a UE is in (NG)EN-DC or NR-DC, and uses a DCCH logical channel.

A routing function of an IAB system is carried out by a BAP layer, and each IAB node saves BH routing configuration and BH RLC channel mapping configuration. A BAP entity performs routing according to the routing configuration, the RLC channel mapping configuration and a routing ID in a BAP layer packet header. The routing ID contains a destination BAP address and a path ID.

The BH routing configuration includes a mapping relationship between the routing ID and a BAP address of a next-hop node. The RLC channel mapping configuration includes a BAP address of a prior-hop node, and a mapping relationship between an ingress link RLC channel ID the BAP address of the next-hop node and an egress link RLC channel ID.

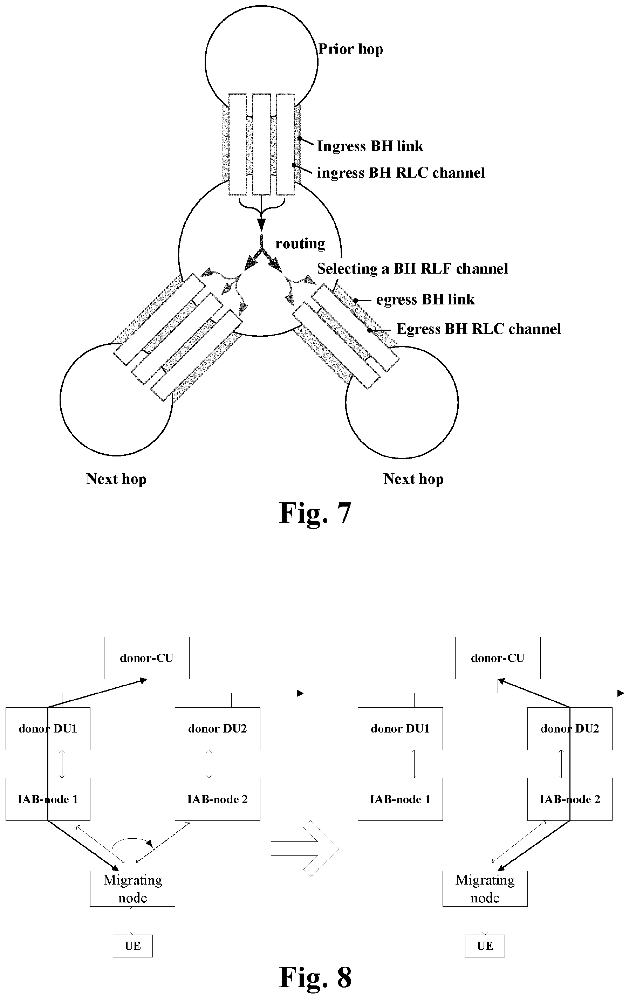

FIG. 7 is a schematic diagram of IAB system routing. As shown in FIG. 7, for each packet, the BAP address of the next-hop node may be looked up from the routing configuration via the routing ID of the packet header. The BAP address of the prior-hop node and the ingress link RLC channel ID are already known. Hence, after the BAP address of the next-hop node is determined, the egress link RLC channel ID may be looked up via the RLC channel mapping configuration according to the BAP address of the prior-hop node + the ingress link RLC channel ID + the BAP address of the next-hop node.

An IAB-donor-DU saves the routing configuration (BH routing configuration) and downlink traffic to BH RLC channel mapping configuration. The IAB-donor-DU performs routing according to the routing configuration, the RLC channel mapping configuration and the routing ID in the BAP layer packet header. The routing configuration includes the mapping relationship between the routing ID and a next-hop node address. The downlink RLC channel mapping configuration includes a target IP address, a DSCP (differentiated services code point) and a mapping relationship between the next-hop node address and the egress link RLC channel ID.

For each downlink packet arriving at the IAB-donor-DU, the IAB-donor-DU may look up the next-hop node address from the routing configuration according to the routing ID in the packet header. Hence, after the next-hop node address is determined, the egress link RLC channel ID may be looked up from the downlink RLC channel mapping configuration according to the IP address and DSCP of the packet.

An access IAB node saves uplink backhaul information (BH information), including a routing ID used by the traffics, an uplink backhaul RLC channel ID and the next-hop node address. The access IAB node configures the routing ID in the BAP layer packet header of uplink traffics according to the uplink BH information, and selects BH RLC channels of uplink traffic transmission and the next-hop node.

The IAB system routing and BH RLC channel mapping are illustrated above, and update of network topology of the IAB system shall be described below. A topology adaptation process when an IAB node moves under the same donor-CU has been standardized in Rel-16 NR.

FIG. 8 is a schematic diagram of intra-CU topology adaptation. When the IAB node changes its parent node (from IAB node 1 to IAB node 2), the donor-CU configures path migration-related configuration for the IAB node via an RRC reconfiguration message, so that the IAB node performs migration of an F1 transmission path.

The path migration-related configuration includes updating default BH RLC channels of uplink F1-C, F1-U and non-F1 data, updating a default BAP routing ID and updating an IP address routed to the donor-DU. When the IAB node is accessed to a new parent node, the above path migration-related configuration is applied. For a child node of the IAB node, path migration-related configuration is performed in the same manner.

3GPP Rel-17 supports a process of network topology update and backhaul (BH) radio link failure (RLF) recovery when an IAB node moves under different donor-CUs. The IAB node may be handed over or reestablished from a parent node served by a source donor-CU (also referred to as an F1-terminating CU or a first donor-CU) to a parent node served by a target donor-CU (also referred to as a non-F1-terminating CU or a second donor-CU), and all traffics of the IAB node (and traffics of its child node) need to be migrated to topology of the non-F1-terminating CU. Rel-17 also supports a topology redundancy process when the IAB node establishes dual connectivity with the non-F 1-terminating CU, and transmission paths of a part of traffics of the IAB node may be migrated to the topology of the non-F1-terminating CU.

After the IAB node is handed over/RLF recovered from donor-CU 1 (F1-terminating CU) to donor-CU 2 (non-F1-terminating CU) or RRC connection between it and donor-CU 2 is added, only RRC of an IAB-MT is connected to donor-CU 2, and an F1 interface is still terminated at donor-CU 1. At this time, the IAB node may also be referred to as a boundary node. RRC connection and an F1 interface of a child node served by it still belong to donor-CU1. Hence, a routing ID, a BH RLC channel and next-hop BAP address of traffics of the child node still belong to the donor-CU1 topology domain.

All routing IDs of the boundary node belongs to the non-F1-terminating topology domain, or the boundary node both transmits traffics with routing IDs within the F1-terminating topology domain and traffics with routing IDs within the non-F1-terminating topology domain. For the routing IDs of the non-F1-terminating topology domain, the boundary node needs to use the IP address of the non-F1-terminating topology domain, and for routing IDs of the F1-terminating topology domain, the boundary node needs to use the IP address of the F1-terminating topology domain. The network needs to configure an IP address of a donor-DU anchored at the non-F1-terminating topology domain or an IP address of a donor-DU anchored at the F1-terminating topology domain for the boundary node. However, there is currently no corresponding solution on how to request for the IP address of the non-F1-terminating topology domain, or how to configure the IP addresses of the F1-terminating domain and the non-F 1-terminating domain.

In the embodiments of this disclosure, an IAB node device includes a migrating node, unless otherwise specified. In addition, "resources of traffics that have been established in a topology domain of a donor-CU for serving for an IAB node" may also be referred to as "migrating traffics of the IAB node to the topology domain of the donor-CU", etc. However, this disclosure is not limited to these expressions. The embodiments of this disclosure shall be further described below.

### Embodiments of a first aspect

The embodiments of this disclosure provide a transport address configuration method, which shall be described from an F1-terminating donor device of an IAB node device.

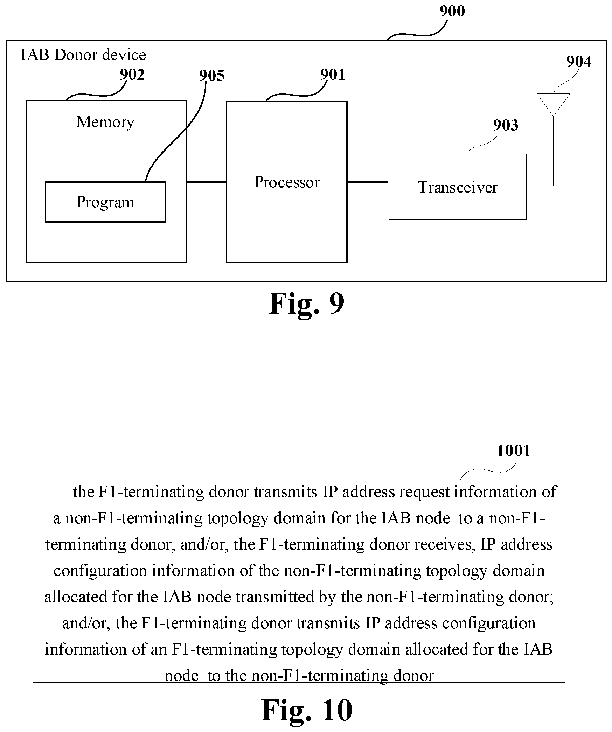

FIG. 10 is a schematic diagram of the transport address configuration method of the embodiments of this disclosure. As shown in FIG. 10, the method includes:
1001: the F1-terminating donor transmits IP address request information of a non-F1-terminating topology domain for the IAB node to a non-F1-terminating donor, and/or,
the F1-terminating donor receives, IP address configuration information of the non-F1-terminating topology domain allocated for the IAB node transmitted by the non-F1-terminating donor; and/or,
the F1-terminating donor transmits IP address configuration information of an F1-terminating topology domain allocated for the IAB node to the non-F1-terminating donor.

It should be noted that FIG. 10 only schematically illustrates the embodiments of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 10.

It can be seen from the above embodiments that the F1-terminating donor may request the non-F1-terminating donor for allocating the IP address of the non-F1-terminating topology domain, or further receive the IP address configuration information of the non-F1-terminating topology domain allocated by the non-F1-terminating donor for the IAB node, so that the F1-terminating donor may request for the IP address of the non-F1-terminating topology domain, or further transmit the IP address of the non-F1-terminating topology domain for the IAB node, such as in a case where the non-F1-terminating donor is unable to transmit a message for the IAB node. F1-terminating donor may receive the IP address configuration information of the non-F1-terminating topology domain transmitted actively by the non-F1-terminating donor for the IAB node, so that transmitting the IP address of the non-F 1-terminating topology domain to the IAB node, such as in a case where the non-F 1-terminating donor is unable to transmit a message for the IAB node. Furthermore, the F1-terminating donor may transmit the IP address configuration information of the F1-terminating topology domain to the non-F1-terminating donor, so that the non-F1-terminating donor may transmit the IP address of the F1-terminating topology domain to the IAB node, such as in a case where the F1-terminating donor is unable to transmit a message to the IAB node. Hence, for the routing IDs of the non-F1-terminating topology domain, the IAB node may use the IP address of the non-F1-terminating topology domain, and for the routing IDs of the F1-terminating topology domain, the IAB node may use the IP address of the F1-terminating topology domain.

In some embodiments, the IAB node includes a migrating node (also referred to as a boundary node), and its F1 connection is terminated at the F1-terminating donor, and the IAB node has RRC connection with the non-F 1-terminating donor. For example, an IAB-MT of the IAB node maintains RRC connection with the non-F1-terminating donor. The F1-terminating donor may be a first IAB-donor-CU (donor central unit), the non-F1-terminating donor may be a second IAB-donor-CU (donor central unit), and the F1-terminating donor device refers to a donor-CU that terminates an F1 interface of the boundary IAB node and its child IAB node, such as the first IAB-donor-CU. The non-F1-terminating donor device refers to a CU that has a function of a donor and does not terminate the F1 interface of the boundary IAB node and its child IAB node, such as the second IAB-donor-CU.

In some embodiments, the requested and/or configured IP address refers to an IP address anchored at a donor-DU and configured for the IAB node (or for the IAB node), and the IP address configuration information may include IP address configurations anchored at at least two donor-DUs, or may include at least one IP address configuration anchored at a donor-DU, and each IP address configuration may include an IP address index and a corresponding IP address; however, the embodiments of this disclosure are not limited thereto.

In the embodiments of this disclosure, "an IP address anchored at IAB-donor-DU" may be understood as "an IP address allocated by the donor-DU" or "TNL (transport network layer) address(es) that is (are) routable via the IAB-donor-DU", and the above terms are interchangeable. However, this disclosure is not limited thereto, for example, the IP address of the donor-DU of the non-F1-terminating topology domain configured for the IAB node refers to a transport network layer (TNL) address configured for the IAB node that is routable via the donor-DU of the non-F 1-terminating topology domain.

In some embodiments, the above IP address request information and/or the IP address configuration information may be carried by an RRC container, or may be carried by an IAB transport migration management request/response or an IAB transport migration modification request, which shall be described below respectively.
(I) The IP address request information and/or the IP address configuration information is/are carried by the RRC container

In some embodiments, the IP address request information is carried by a first RRC container, for example, the IP address request information is carried by other IAB information message (an information element structure IABOtherInformation) or an RRC reconfiguration message contained in the first RRC container, and the first RRC container includes IP address configuration information of the IAB node in the F 1-terminating topology domain. The IABOtherInformation message is an RRC message used by the IAB node to request an IP addresses from the network and report an IP address that is actually used or has been allocated by the network for the IAB node. In the embodiments, the F1-terminating donor simulates the IAB node to generate the IABOtherInformation message, contains the message in the first RRC container and transmits to the non-F 1-terminating donor, so as to replace the IAB node to request for the IP address of the non-F1 topology domain. The RRC reconfiguration message is an RRC message for the network to configure an IP address for the IAB node. In the embodiments, the RRC reconfiguration message is generated by the F1-terminating donor and included in the first RRC container to be transmitted to the non-F1-terminating donor, so as to request the IP address of the non-F1 topology domain.

In some embodiments, the IP address configuration information is carried by a second RRC container, for example, the IP address configuration information is carried by an RRC reconfiguration message (RRCReconfiguration) contained in the second RRC container.

As an existing RRC message (such as IABOtherInformation) is an RRC message used by an IAB node to request a donor for an IP address and an RRC reconfiguration message (RRCReconfiguration) is an RRC message used to configure an IP address for the IAB node, the RRC message (such as IABOtherInformation) may be reused to carry IP address request information for a boundary node, and the RRC reconfiguration message (RRCReconfiguration) may be reused to carry IP address configuration information for the boundary node, thereby making the request for the IP address and configuration of the IP address more simple and flexible.

In some embodiments, the above IP address may be request and/or configured in existing Xn processes (which may be carried by Xn interface application protocol (XnAP) signaling), such as a handover preparation, dual-connectivity establishment or modification process, and a UE context retrieve process, etc. For example, the first RRC container is carried by at least one of the following messages: a handover request message, a secondary node addition request message, a secondary node modification request message, a secondary node modification required message, or a UE context retrieve response message. The second RRC container is carried by at least one of the following messages: a handover request response message, a secondary node addition response message, a secondary node modification response message, or a secondary node modification required message. Following description shall be given with reference to different scenarios. In addition, as these Xn processes are processes for the boundary node, they may be naturally distinguished from the request for an IP address and the configuration information for the child node, so that the donor may transmit the IP address configuration by taking RRC connection with the boundary node to a boundary node.

### I. Handover scenario

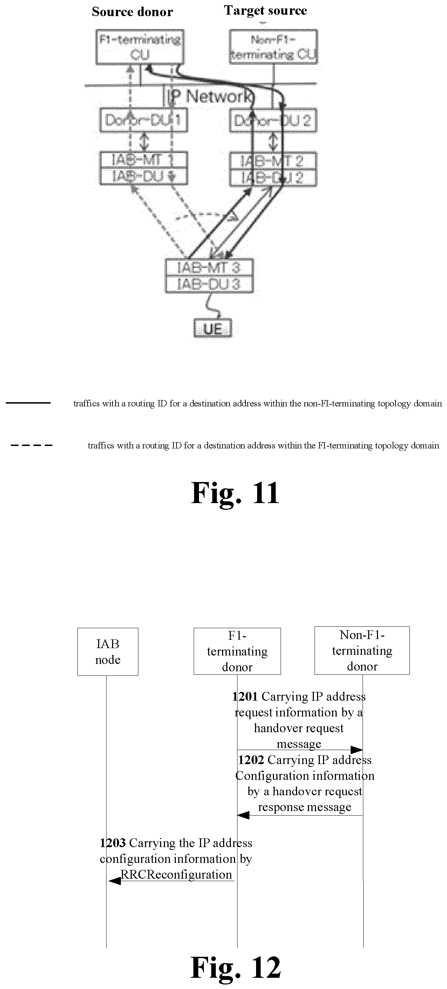

In some embodiments, FIG. 11 is a schematic diagram of a handover scenario. As shown in FIG. 11, in the handover scenario, all traffics of the boundary node are migrated to the non-F1-terminating topology domain, the F1-terminating donor is a source donor from which the IAB node is handed over, the non-F1-terminating donor is a target donor to which the IAB node is handed over, and the IP address of the non-F1-terminating topology domain refers to an IP address anchored at donor-DU2. FIG. 12 is a schematic diagram of the a transport address configuration method in this handover scenario. As shown in FIG. 12, the method includes:
1201: the F1-terminating donor transmits IP address request information of the non-F 1-terminating topology domain for the IAB node to the non-F 1-terminating donor; and
1202: the F1-terminating donor receives, IP address configuration information of the non-F 1-terminating topology domain allocated for the IAB node transmitted by the non-F 1-terminating donor.

In some embodiments, the IP address request information is carried by the first RRC container, the IP address configuration information is carried by the second RRC container, the first RRC container is carried by a handover request message, and the second RRC container is carried by a handover request response message. Hence, the F1-terminating donor transmits a handover request message (HANDOVER REQUEST) to the non-F 1-terminating donor. For example, the handover request message contains the RRC message HandoverPreparationInformation, and the entire RRC message IABOtherInformation generated by the F1-terminating donor may be introduced into HandoverPreparationInformation. IABOtherInformation serves as the first RRC container to carry the IP address request information (IAB-TNLAddressInfo field) of the non-F1-terminating topology domain, and IABOtherInformation may further include IP address configuration information of the boundary node in the F1-terminating topology domain. The non-F1-terminating donor replies to the F1-terminating donor with a handover request response (HANDOVER REQUEST ACKNOWLEDGE). For example, the handover request response contains an RRC message HandoverCommand, which carries the entire RRC message RRCReconfiguration generated by the non-F 1-terminating donor. And RRCReconfiguration serves as the second RRC container to carry the IP address configuration information (iab-IP-AddressConfigurationList-r16 field) of the non-F 1-terminating topology domain.

HandoverPreparationInformation may be expressed as follows by using ASN. 1 data format:

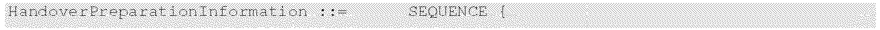

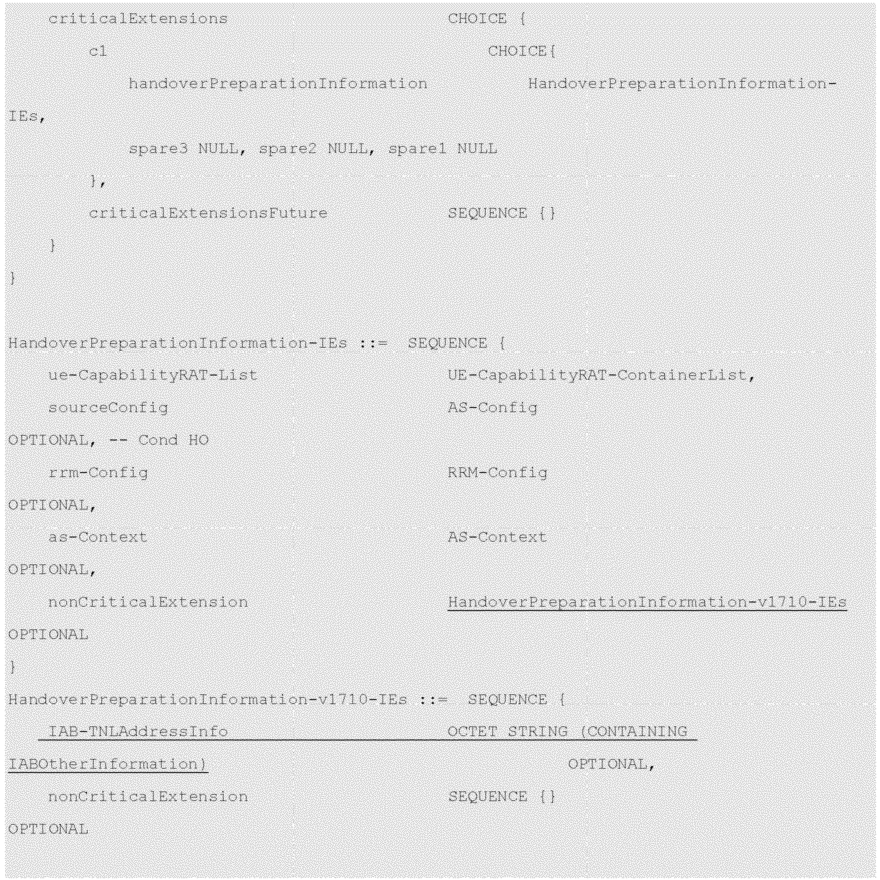

IABOtherInformation may be expressed as follows by using ASN.1 data format:

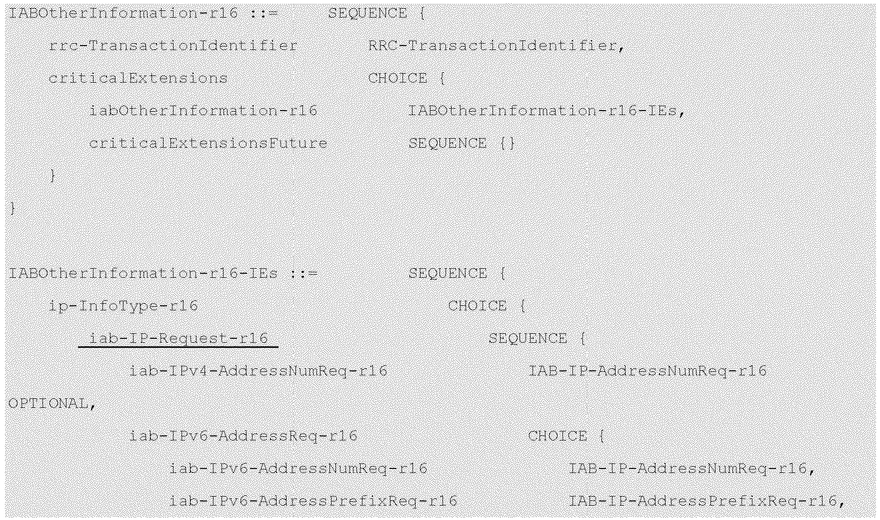

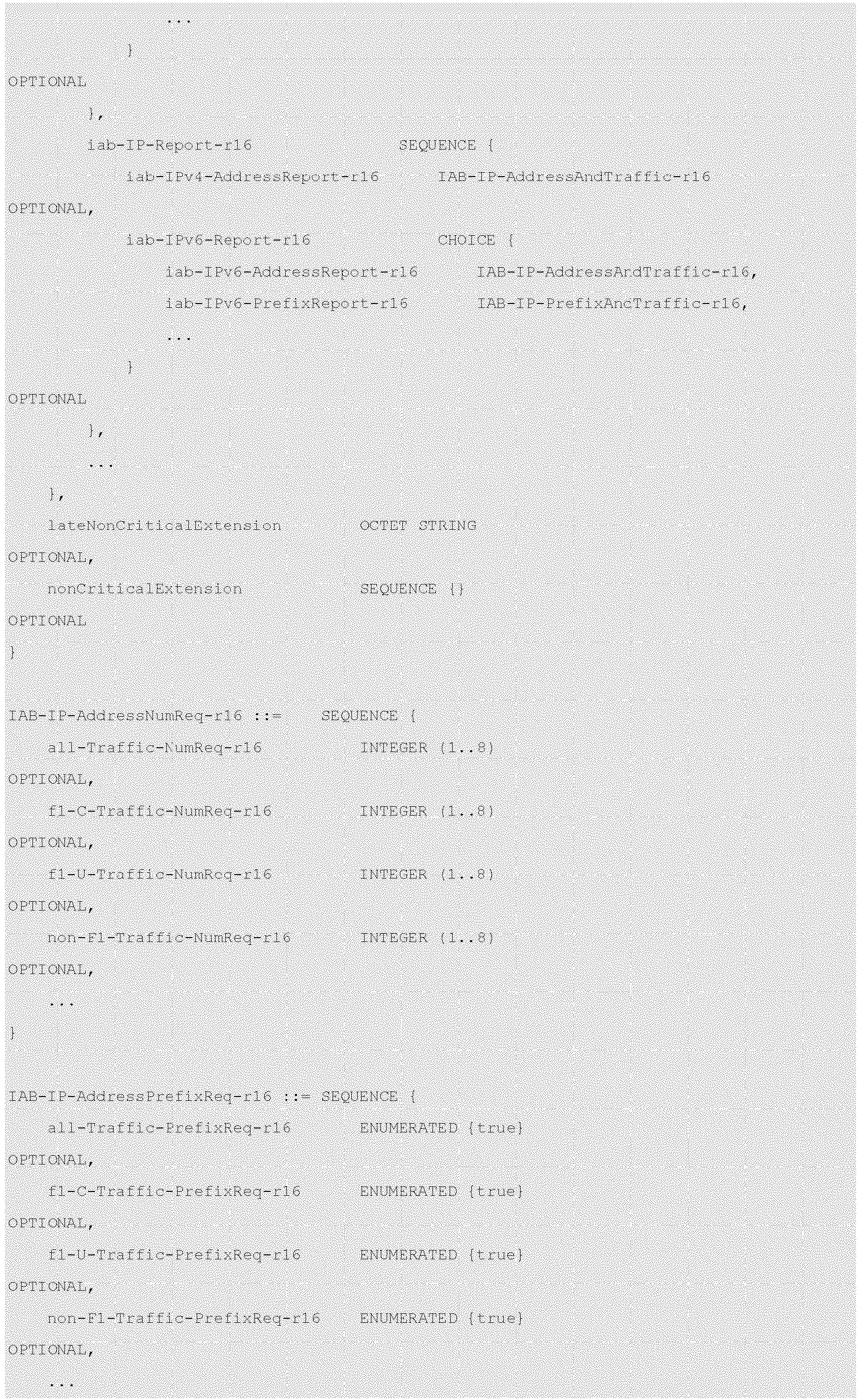

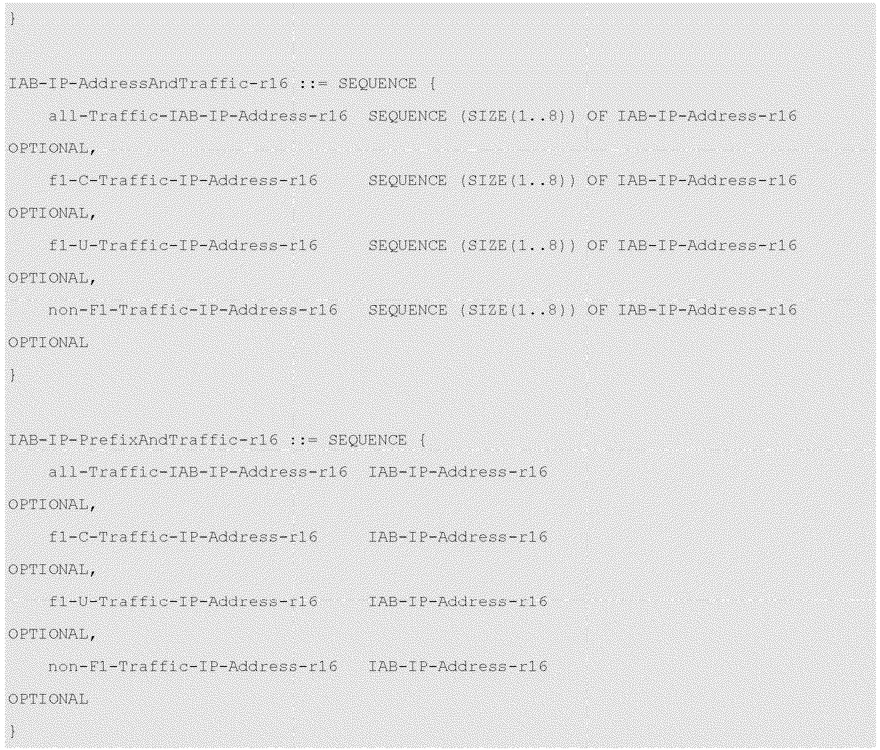

IABOtherInformation may further carry the number of IP addresses requested for various traffics or actually-adopted IP addresses of various traffics.

HandoverCommand may be expressed as follows by using ASN. 1 data format:

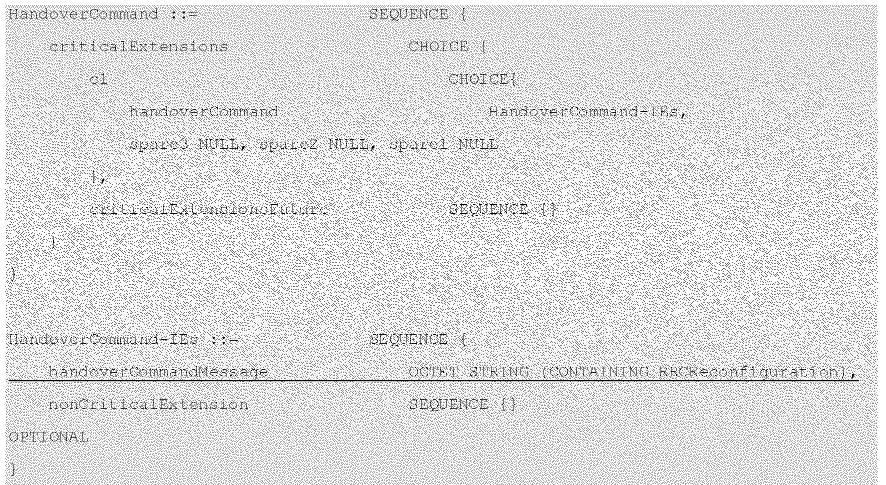

RRCReconfiguration may be expressed as follows by using ASN.1 data format:

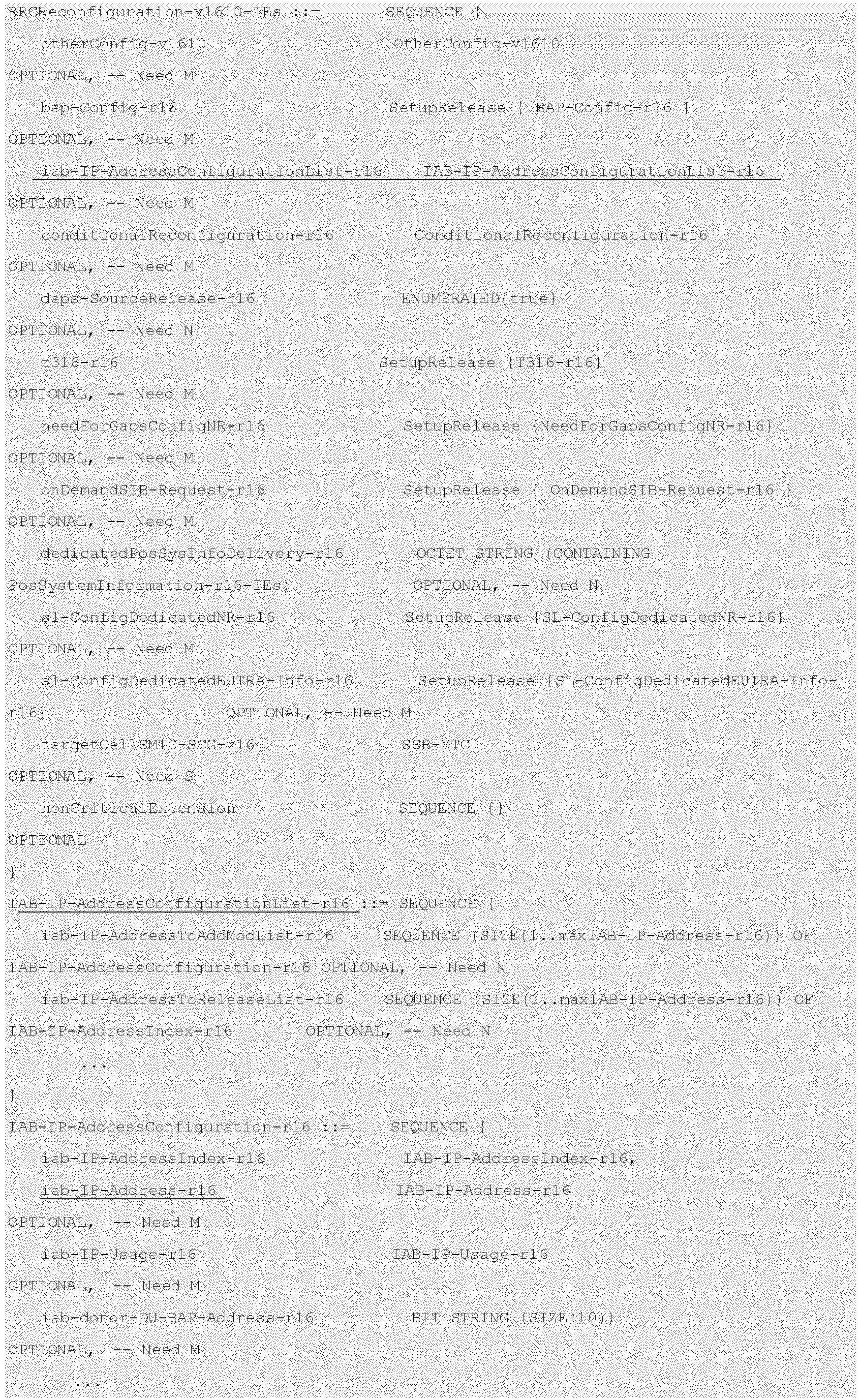

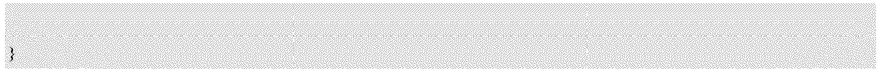

In some embodiments, RRCReconfiguration carries the IP address configuration information IAB-IP-AddressConfigurationList-r16 of the non-F 1-terminating topology domain, including an IP address addition and modification list and an IP address release list, each list including at least one IP address configuration IAB-IP-AddressConfiguration-r16, and each IP address configuration including an IP address index and a corresponding IP address.

Therefore, a new RRC container IABOtherInformation may be introduced into the handover request message to request the IP address of the non-F 1-terminating topology domain, and the IP address configuration information element contained in the RRC container RRCReconfiguration in the handover request response message may be used to carry the IP address of the non-F1-terminating topology domain for the boundary node.

The above is an example of that the IP address request information is carried by IABOtherInformation contained in the first RRC container. In addition, the IP address request information may also be carried by the RRC reconfiguration message contained in the first RRC container, and the embodiments of this disclosure are not limited thereto.

In some embodiments, the method may further include:
1203: the F1-terminating donor transmits the received IP address configuration information by to the IAB node. For example, the F1-terminating donor forwards HandoverCommand generated by the non-F 1-terminating donor, HandoverCommand carrying the entire RRC message RRCReconfiguration generated by the non-F1-terminating donor, RRCReconfiguration carrying the IP address configuration information of the non-F1-terminating topology domain.

It can be seen from the above embodiments that the F1-terminating donor may request the non-F1-terminating donor for allocating the IP address of the non-F1-terminating topology domain, or further receive the IP address configuration information of the non-F1-terminating topology domain allocated by the non-F1-terminating donor for the IAB node, so that the F1-terminating donor may request for the IP address of the non-F1-terminating topology domain, or further transmit the IP address of the non-F1-terminating topology domain for the IAB node in a case where the non-F 1-terminating donor is unable to transmit a message for the IAB node. Hence, for the routing IDs of the non-F1-terminating topology domain, the IAB node may use the IP address of the non-F1-terminating topology domain.

### II. For dual-connectivity scenario 1

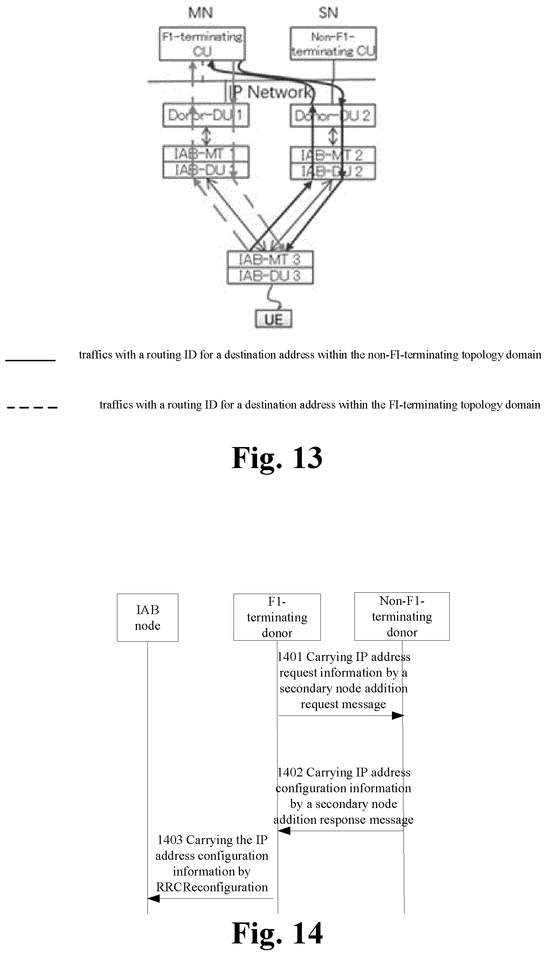

In some embodiments, FIG. 13 is a schematic diagram of dual-connectivity scenario 1. As shown in FIG. 13, in dual-connectivity scenario 1, the F1-terminating donor is a master node MN of the IAB node, and the non-F1-terminating donor is a secondary node SN of the IAB node. After dual-connectivity is established, a part of traffics of the boundary node may be migrated to the non-F1-terminating topology domain, and a part of traffics are still at the F1-terminating donor topology domain. The IP address of the non-F1-terminating topology domain refers to an IP address anchored at donor-DU2. The IP address of the non-F1-terminating topology domain may be requested during a process of establishing the dual-connectivity, or the IP address of the non-F1-terminating topology domain or the IP address of the F1-terminating topology domain may be requested/configured after the dual-connectivity is established, which shall be described below respectively.

FIG. 14 is a schematic diagram of a transport address configuration method of embodiments of this disclosure in the dual-connectivity scenario 1. As shown in FIG. 14, the method includes:
1401: the F1-terminating donor transmits IP address request information of the non-F 1-terminating topology domain for the IAB node to the non-F 1-terminating donor; and
1402: the F1-terminating donor receives, the IP address configuration information of the non-F1-terminating topology domain allocated for the IAB node transmitted by the non-F1-terminating donor.

In some embodiments, the IP address of the non-F1-terminating topology domain is requested in a process of adding a secondary cell group. The IP address request information is carried by the first RRC container, the IP address configuration information is carried by the second RRC container, the first RRC container is carried by a secondary node addition request message, and the second RRC container is carried by a secondary node addition response message. In the process of adding a secondary cell group, the F1-terminating donor transmits a secondary node addition request message (S-node AdditionRequest) to the non-F1-terminating donor, such as introducing the entire RRC message IABOtherInformation generated by the F1-terminating donor into the RRC message CG-ConfigInfo contained therein. IABOtherInformation serves as the first RRC container to carry the IP address request information (IAB-TNLAddressInfo field) of the non-F1-terminating topology domain. The non-F1-terminating donor replies to the F1-terminating donor with a secondary node addition response message (S-node Addition Response), a secondary cell group configuration information field scg-CellGroupConfig in the RRC message (CG-Config) contained therein carrying the entire RRC message RRCReconfiguration generated by the non-F 1-terminating donor. In a case where the SN does not establish SRB3 (in which case the SN is unable to directly transmit the RRC message to the IAB node), RRCReconfiguration serves as the second RRC container to carry the IP address configuration information (iab-IP-AddressConfigurationList-r16 field) of the non-F 1-terminating topology domain.

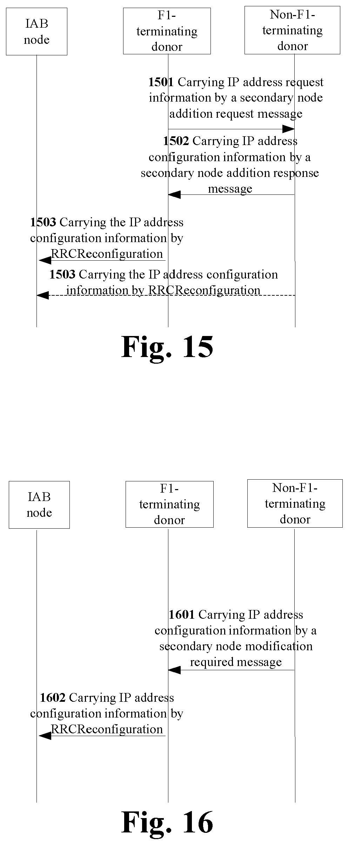

FIG. 15 is a schematic diagram of a transport address configuration method in the dual-connectivity scenario 1. As shown in FIG. 15, the method includes:
1501: the F1-terminating donor transmits IP address request information of the non-F 1-terminating topology domain for the IAB node to the non-F 1-terminating donor; and
1502: the F1-terminating donor receives, the IP address configuration information of the non-F1-terminating topology domain allocated for the IAB node transmitted by the non-F1-terminating donor.

In some embodiments, after the dual-connectivity is established, the IP address of the non-F 1-terminating topology domain is requested in a process of modifying a secondary cell group. The IP address request information is carried by the first RRC container, the IP address configuration information is carried by the second RRC container, the first RRC container is carried by a secondary node modification request message, and the second RRC container is carried by a secondary node modification response message. In the process of modifying a secondary cell group, the F1-terminating donor transmits a secondary node modification request message (S-node Modification Request) to the non-F1-terminating donor, such as introducing the entire RRC message IABOtherInformation generated by the F1-terminating donor into the RRC message CG-ConfigInfo contained therein. IABOtherInformation serves as the first RRC container to carry the IP address request information (IAB-TNLAddressInfo field) of the non-F1-terminating topology domain. The non-F1-terminating donor replies to the F1-terminating donor with a secondary node modification response message (S-node Modification Response), a secondary cell group configuration information (scg-CellGroupConfig field) in the RRC message (CG-Config) contained therein carrying the entire RRC message RRCReconfiguration generated by the non-F1-terminating donor. In a case where the SN does not establish SRB3, RRCReconfiguration serves as the second RRC container to carry the IP address configuration information (iab-IP-AddressConfigurationList-r16 field) of the non-F1-terminating topology domain.

CG-ConfigInfo may be expressed as follows by using ASN.1 data format:

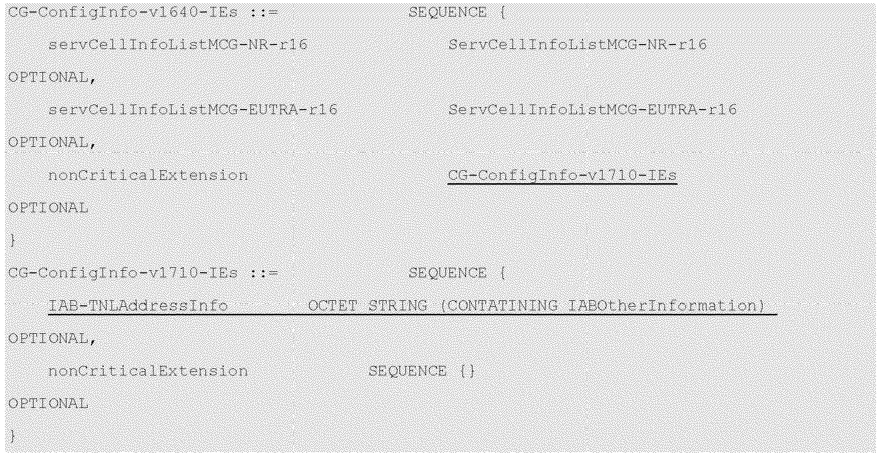

CG-Config may be expressed as follows by using ASN.1 data format:

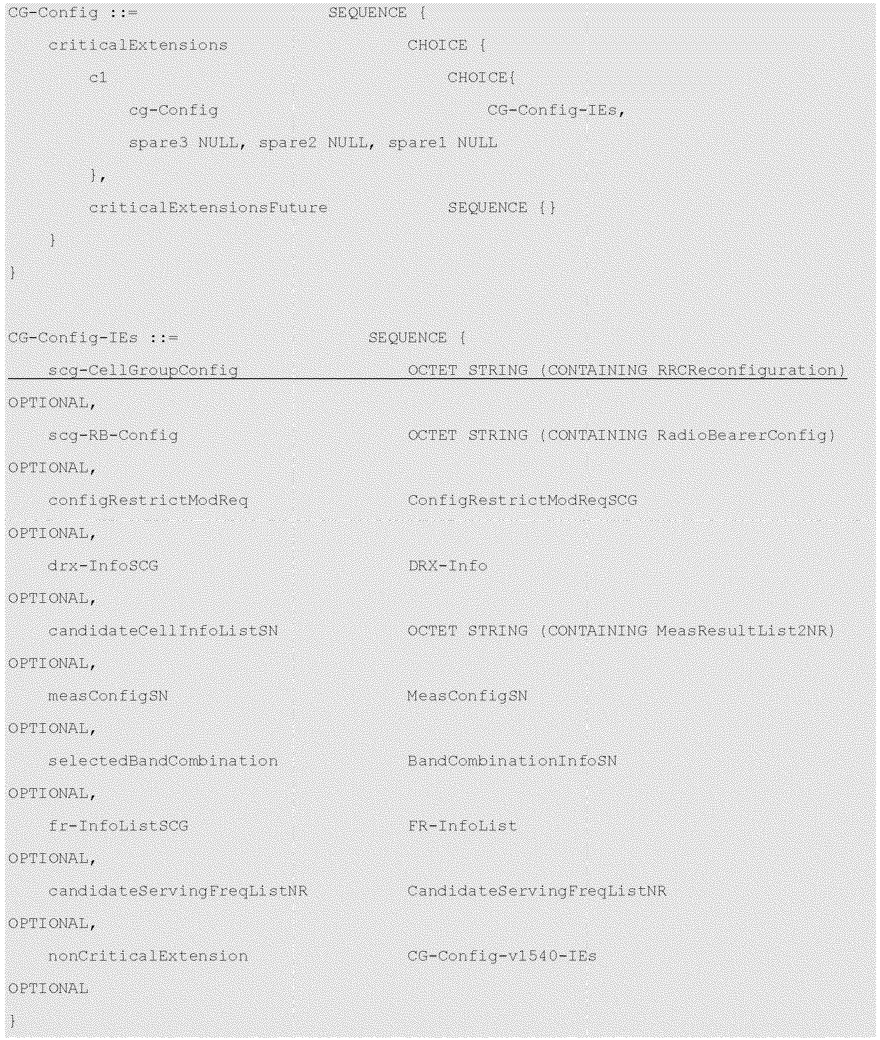

The expression of RRCReconfiguration by using ASN. 1 data format is as described above, which shall not be repeated herein any further.

Therefore, the new RRC container IABOtherInformation may be introduced into the secondary node addition/modification request message to request the IP address of the non-F 1-terminating topology domain, and the IP address configuration information element contained in the RRC container RRCReconfiguration in the secondary node addition/modification response message may be used to carry the IP address of the non-F1-terminating topology domain configured for the boundary node.

The above is an example of that the IP address request information is carried by IABOtherInformation contained in the first RRC container. In addition, the IP address request information may also be carried by the RRC reconfiguration message contained in the first RRC container, and the embodiments of this disclosure are not limited thereto.

In some embodiments, in the case where the SN does not establish SRB3, the method may further include:
1403/1503: the F1-terminating donor transmits the received IP address configuration information to the IAB node. For example, the F1-terminating donor forwards RRCReconfiguration in CG-Config generated by the non-F 1-terminating donor, RRCReconfiguration carrying the IP address configuration information of the non-F 1-terminating topology domain.

In 1503, optionally, if the SN establishes SRB3, the non-F1-terminating donor may also transmit the IP address configuration information to the IAB node; however, the embodiments of this disclosure are not limited thereto.

It can be seen from the above embodiments that the F1-terminating donor may request the non-F1-terminating donor for allocating the IP address of the non-F1-terminating topology domain, or further receive the IP address configuration information of the non-F1-terminating topology domain allocated by the non-F1-terminating donor for the IAB node, so that the F1-terminating donor may request for the IP address of the non-F1-terminating topology domain, or further transmit the IP address of the non-F1-terminating topology domain for the IAB node in a case where the non-F 1-terminating donor is unable to transmit a message for the IAB node. Hence, for the routing IDs of the non-F1-terminating topology domain, the IAB node may use the IP address of the non-F1-terminating topology domain.

FIG. 16 is a schematic diagram of another transport address configuration method in the dual-connectivity scenario 1. As shown in FIG. 16, the method includes:
1601: the F1-terminating donor receives, the IP address configuration information of the non-F1-terminating topology domain allocated for the IAB node transmitted by the non-F 1-terminating donor, and carrying the second RRC container by the secondary node modification required message.

In some embodiments, a difference from FIG. 15 is that after establishment of the dual-connectivity is completed and in the case where the SN does not establish SRB3, the F1-terminating donor is not needed to actively request the IP address of the non-F 1-terminating topology domain, the non-F1-terminating donor may actively initiate IP address reconfiguration for the non-F 1-terminating topology domain, the IP address configuration information is carried by the second RRC container, and the second RRC container is carried by the secondary node modification required message.

For example, in the process of modifying the secondary cell group, the non-F1-terminating donor transmits a secondary node modification required message (S-node Modification Required) to the F1-terminating donor. For example, secondary cell group configuration information (scg-CellGroupConfig field) contained in the RRC message CG-Config contained in the secondary cell modification required message carries the entire RRC message RRCReconfiguration generated by the non-F1-terminating donor, and RRCReconfiguration serves as the second RRC container to carry the IP address configuration information of the non-F1-terminating topology domain, which is also referred to as IP address reconfiguration information.

Therefore, the IP address configuration information element contained in the RRC container RRCReconfiguration in the secondary node modification required message may carry the IP address of the non-F1-terminating topology domain reconfigured for the boundary node.

In some embodiments, the method may further include:
1602: the F1-terminating donor forwards the received IP address configuration information to the IAB node. For example, the F1-terminating donor forwards RRCReconfiguration in CG-Config generated by the non-F1-terminating donor, and RRCReconfiguration carries the IP address configuration information of the non-F1-terminating topology domain.

It can be seen from the above embodiments that the F1-terminating donor may receive the IP address configuration information of the non-F1-terminating topology domain actively transmitted by the non-F1-terminating donor, so that the F 1-terminating donor may transmit the IP address of the non-F1-terminating topology domain for the IAB node in a case where the non-F1-terminating donor is unable to transmit a message for the IAB node. Hence, for the routing IDs of the non-F1-terminating topology domain, the IAB node may use the IP address of the non-F1-terminating topology domain.

### III. For dual-connectivity scenario 2

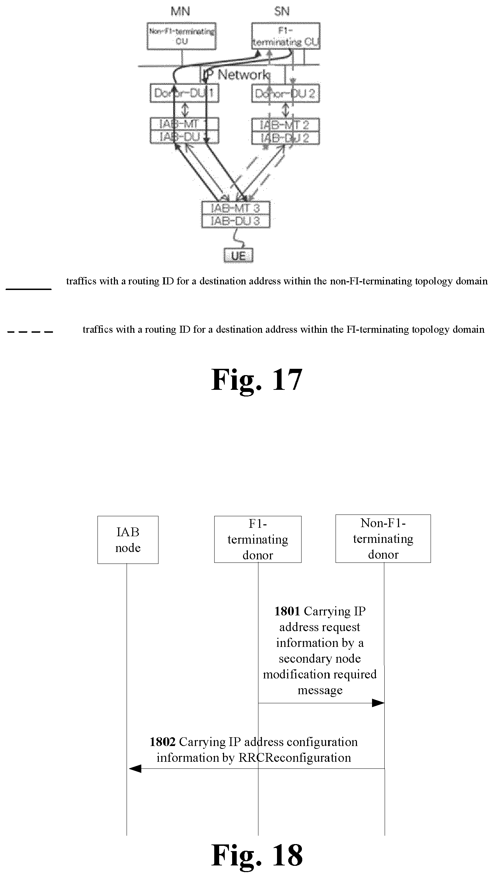

In some embodiments, FIG. 17 is a schematic diagram of dual-connectivity scenario 2. As shown in FIG. 17, in dual-connectivity scenario 2, the F1-terminating donor is a master node SN CU of the IAB node, and the non-F1-terminating donor is a secondary node MN CU of the IAB node. After the dual-connectivity is established, a part of traffics of the boundary node may be migrated to the non-F1-terminating topology domain, while a part of traffics thereof still remain in the F1-terminating donor topology domain. The IP address of the non-F 1-terminating topology domain refers to an IP address anchored at donor-DU1, and the IP address of the F1-terminating topology domain refers to an IP address anchored at donor-DU2. As F1 connection is completed after the dual-connectivity is established, different from dual-connectivity scenario 1, the IP address of the non-F1-terminating topology domain may not be requested in the process of establishing dual-connectivity, and the IP address of the non-F1-terminating topology domain or the IP address of the F1-terminating topology domain may be requested/configured only after the dual-connectivity has been established, which shall be described below respectively.

FIG. 18 is a schematic diagram of t a transport address configuration method in dual-connectivity scenario 2. As shown in FIG. 18, the method includes:
1801: the F1-terminating donor transmits the IP address request information of the non-F 1-terminating topology domain for the IAB node to the non-F 1-terminating donor.

In some embodiments, after the dual-connectivity has been established, in the process of modifying the secondary cell group, the IP address of the non-F1-terminating topology domain is requested. The IP address request information is carried by the first RRC container, and the first RRC container is carried by the secondary node modification required message. The F1-terminating donor transmits the secondary node modification required message to the non-F1-terminating donor, such as introducing IP address request information (IAB-TNLAddressInfo field) in the RRC message CG-Config contained therein to carry the entire RRC message IABOtherInformation generated by the F1-terminating donor, and IABOtherInformation serves as the first RRC container to carry the IP address request information of the non-F 1-terminating topology domain. As the IP address configured by the non-F 1-terminating donor may be directly transmitted by the non-F 1-terminating donor to the boundary node via SRB1, the non-F1-terminating donor does not need to reply to the F1-terminating donor with the IP address configuration information. In other words, the F 1-terminating donor does not receive the IP address configuration information transmitted by the non-F 1-terminating donor.

CG-Config may be expressed as follows by using ASN. 1 data format:

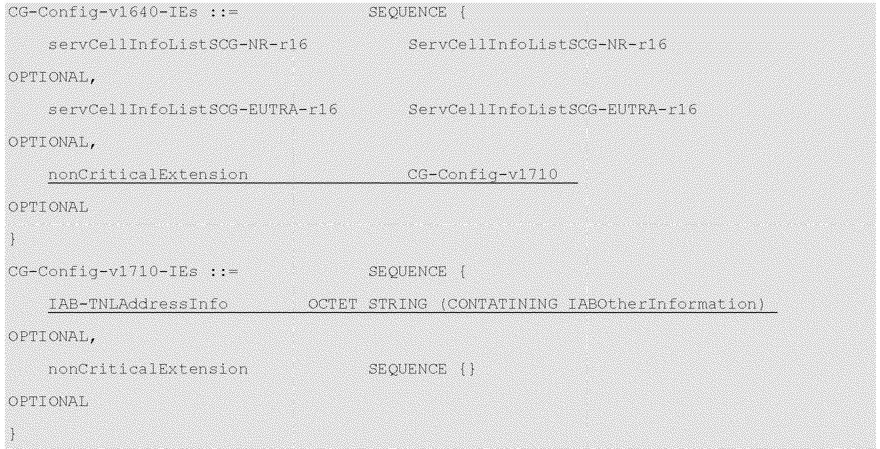

Therefore, a new RRC container IABOtherInformation may be introduced into the secondary node modification required message to request for the IP address of the non-F1-terminating topology domain.

The above is an example of that the IP address request information is carried by IABOtherInformation contained in the first RRC container. In addition, the IP address request information may also be carried by the RRC reconfiguration message contained in the first RRC container, and the embodiments of this disclosure are not limited thereto.

In some embodiments, the method may further include:
1802: the non-F1-terminating donor transmits the IP address configuration information to the IAB node. For example, the non-F1-terminating donor generates RRCReconfiguration, RRCReconfiguration carrying the IP address configuration information of the non-F1-terminating topology domain.

It can be seen from the above embodiments that the F1-terminating donor may request the non-F1-terminating donor for allocating the IP address of the non-F1-terminating topology domain, so that the F1-terminating donor requests for the IP address of the non-F1-terminating topology domain, and the non-F1-terminating donor transmits the IP address of the non-F 1-terminating topology domain to the IAB node. Hence, for the routing IDs of the non-F1-terminating topology domain, the IAB node may use the IP address of the non-F1-terminating topology domain.

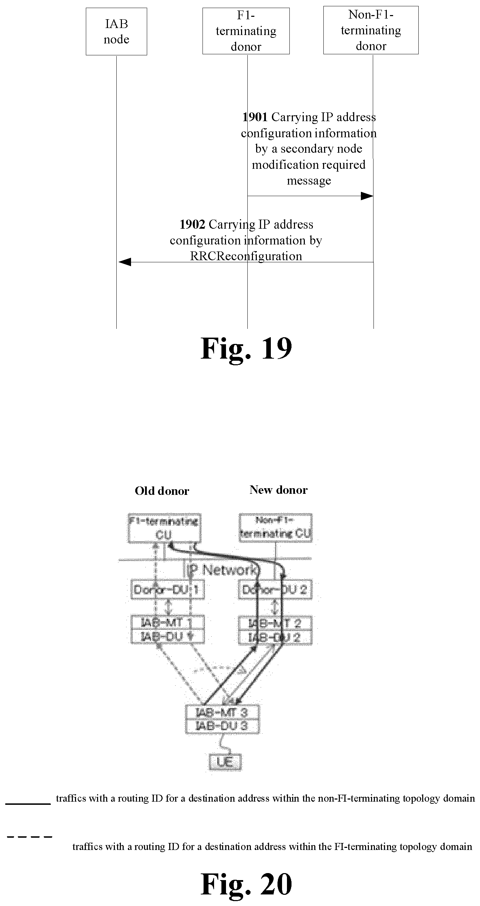

FIG. 19 is a schematic diagram of another transport address configuration method in dual-connectivity scenario 2. As shown in FIG. 19, the method includes:
1901: the F1-terminating donor transmits the IP address configuration information of the F1-terminating topology domain allocated for the IAB node to the non-F1-terminating donor, and carrying the second RRC container by the secondary node modification required message.

In some embodiments, after the dual-connectivity has been established, in a case where the SN does not establish SRB3, the F1-terminating donor may actively initiate IP address reconfiguration for the F1-terminating topology domain, the IP address configuration information is carried by the second RRC container, and the second RRC container is carried by the secondary node modification required message.

For example, in the process of modifying the secondary cell group, the F1-terminating donor transmits a secondary node modification required message (S-node Modification Required) to the non-F1-terminating donor. For example, secondary cell group configuration information (scg-CellGroupConfig field) contained in the RRC message CG-Config contained in the secondary cell modification required message carries the entire RRC message RRCReconfiguration generated by the F1-terminating donor, and RRCReconfiguration serves as the second RRC container to carry the IP address configuration information of the F 1-terminating topology domain, which is also referred to as IP address reconfiguration information.

CG-Config may be expressed as follows by using ASN. 1 data format:

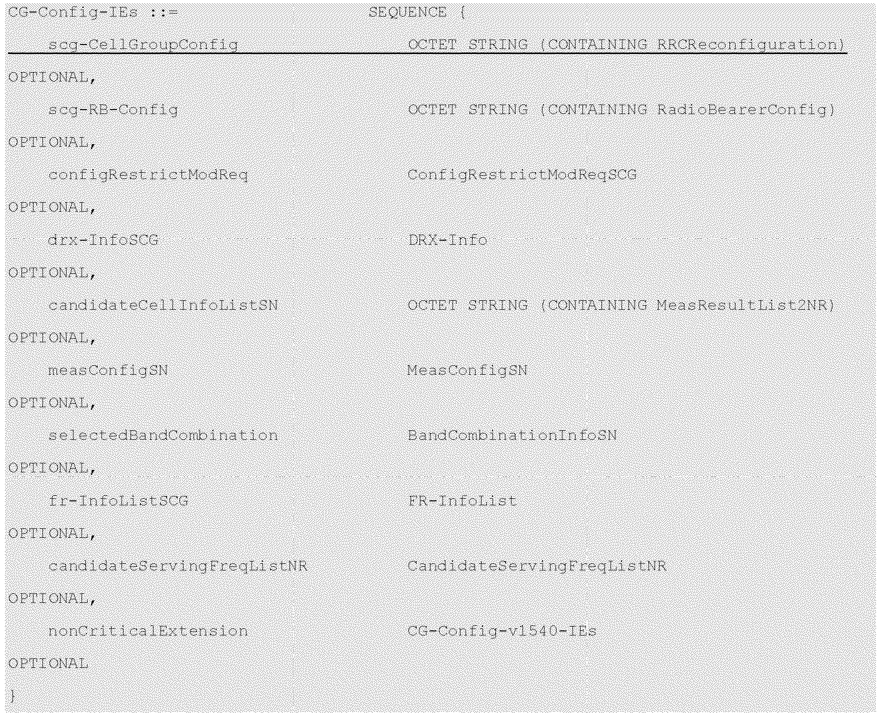

Therefore, the IP address of the F 1-terminating topology domain reconfigured for the boundary node may be indicated by an existing IP address configuration information element in the secondary node modification required message.

In some embodiments, the method may further include:
1902: the non-F1-terminating donor forwards the received IP address configuration information of the F1-terminating topology domain by to the IAB node. For example, the non-F1-terminating donor forwards RRCReconfiguration in CG-Config generated by the F1-terminating donor, and RRCReconfiguration carries the IP address configuration information of the F1-terminating topology domain.

It can be seen from the above embodiments that the F1-terminating donor may transmits IP address configuration information of the F 1-terminating donor domain to the non-F1-terminating topology domain, so that the non-F1-terminating donor may transmit the IP address of the F1-terminating topology domain to the IAB node in a case where the F1-terminating donor is unable to transmit a message to the IAB node. Hence, for the routing IDs of the F1-terminating topology domain, the IAB node may use the IP address of the F1-terminating topology domain.

### IV For an RLF recovery scenario

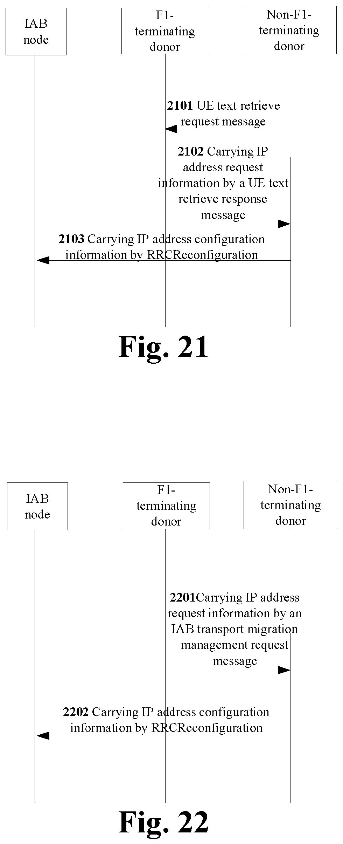

In some embodiments, FIG. 20 is a schematic diagram of an RLF recovery scenario. As shown in FIG. 20, in the RLF recovery scenario, the F1-terminating donor is a donor of the IAB node after RLF recovery (an old donor-CU), and the non-F1-terminating donor is a donor of the IAB node before RLF recovery (a new donor-CU), and the IP address of the non-F 1-terminating topology domain refers to the IP address anchored at donor-DU2. FIG. 21 is a schematic diagram of a transport address configuration method in the handover scenario. As shown in FIG. 21, the method includes:
2101: the F1-terminating donor transmits the IP address request information of the non-F 1-terminating topology domain for the IAB node to the non-F1-terminating donor.

In some embodiments, the IP address of the non-F1-terminating topology domain is requested in a UE context retrieve process, and the IP address request information is carried by the first RRC container, and the first RRC container is carried by a UE context retrieve response message. Therefore, the non-F 1-terminating donor transmits a UE context retrieve request message (RETRIEVE UE CONTEXT REQUEST) to the F1-terminating donor, and the F1-terminating donor replies to the non-F1-terminating donor with a UE context retrieve response message (RETRIEVE UE CONTEXT RESPONSE). For example, the UE context retrieve response message contains an RRC message HandoverPreparationInformation, the entire RRC message IABOtherInformation generated by the F1-terminating donor may be introduced into HandoverPreparationInformation. IABOtherInformation serves as the first RRC container to carry IP address request information (IAB-TNLAaddressInfo field) of the non-F1-terminating topology domain, and IABOtherInformation may further include IP address configuration information of the boundary node in the F1-terminating topology domain. As the IP address configuration information may only be transmitted by the non-F 1-terminating donor after the boundary node is reestablished to the non-F1-terminating donor, the non-F1-terminating donor does not need to reply to the F1-terminating donor with the IP address configuration information. In other words, the F1-terminating donor does not receive the IP address configuration information transmitted by the non-F1-terminating donor.

Hence, a new RRC container IABOtherInformation may be introduced into the UE context retrieve response message to request for the IP address of the non-F1-terminating topology domain.

The above is an example that the IP address request information is carried by IABOtherInformationio contained in the first RRC container. In addition, the IP address request information may be carried by an RRC reconfiguration message contained in the first RRC container, and the embodiments of this disclosure are not limited thereto.

In some embodiments, the method may further include:
2102: the non-F1-terminating donor transmits the IP address configuration information to the IAB node. For example, the non-F1-terminating donor generates RRCReconfiguration, RRCReconfiguration carrying the IP address configuration information of the non-F1-terminating topology domain.

It can be seen from the above embodiments that the F1-terminating donor may request the non-F1-terminating donor for allocating the IP address of the non-F 1-terminating topology domain, so that the F1-terminating donor requests for the IP address of the non-F1-terminating topology domain, and the non-F1-terminating donor transmits the IP address of the non-F 1-terminating topology domain to the IAB node. Hence, for the routing IDs of the non-F1-terminating topology domain, the IAB node may use the IP address of the non-F1-terminating topology domain.

(II) The IP address request information and/or IP address configuration information is/are carried by an IAB transport migration management request/response or IAB transport migration modification request
In some embodiments, the IP address request information is carried by the IAB transport migration management request message, and further includes a boundary node identifier, which is used to indicate that the IAB node is a boundary node, that is, it indicates the IP address request information for the boundary node. The IP address configuration information is carried by an IAB transport migration management response message or an IAB transport migration modification request message, and includes a boundary node identifier, and the boundary node identifier is used to indicate that the IAB node is a boundary node, that is, it indicates the IP address configuration information configured for the boundary node.

As the IAB transport migration management request/response or IAB transport migration modification request is specific to the IAB node and configuration of an AS layer is not concerned, by requesting by the IAB transport migration management request/response or IAB transport migration modification request and configuring the IP addresses of the non-F1-terminating topology domain, request and configuration of the IP address may be made more simple and flexible.

### I. For a handover scenario

In some embodiments, as shown in FIG. 11, in the handover scenario, traffics of the boundary node are all migrated to the non-F1-terminating topology domain. The F1-terminating donor is a source donor from which the IAB node is handed over, the non-F 1-terminating donor is a target donor to which the IAB node is handed over, and the IP address of the non-F1-terminating topology domain refers to an IP address anchored at donor-DU2. FIG. 22 is a schematic diagram of a transport address configuration method in the handover scenario. As shown in FIG. 22, the method includes:
2201: the F1-terminating donor transmits IP address request information of the non-F 1-terminating topology domain for the IAB node by to the non-F 1-terminating donor.

In some embodiments, the IP address request information is carried by the IAB transport migration management request message (IAB TRANSPORT MIGRATION MANAGEMENT REQUEST). Thus, after handover preparation, the F1-terminating donor transmits an IAB transport migration management request message to the non-F1-terminating donor. For example, the IAB transport migration management request message may carry the IP address request information IAB TNL ADDRESS REQUEST of the non-F1-terminating topology domain, and the IP address request information further includes the boundary node identifier. The boundary node identifier is used to indicate that the IAB node is a boundary node, that is, it indicates that the IP address request information is IP address request information of the non-F1-terminating topology domain for the boundary node.

IAB TNL ADDRESS REQUEST may be expressed as follows by using ASN.1 data format:

| **IE/Group Name** | | | **Presence** | **Range** | **IE type and reference** |
|---|---|---|---|---|---|
| **Boundary Node** | | | **○** | | ENUMERATED (True,...) |
| IAB IPv4 Addresses Requested | | | ○ | | IAB TNL Addresses Requested |
| CHOICE *IAB IPv6 Request Type* | | | ○ | | |
| | *>IPv6 Address* | | | | |
| | | >>IAB IPv6 Addresses Requested | M | | IAB TNL Addresses Requested |
| | *>IPv6 Prefix* | | | | |
| | | >>IAB IPv6 Address Prefixes Requested | M | | IAB TNL Addresses Requested |

IAB TNL ADDRESS REQUEST includes a request information IAB TNL Addresses Requested field and a boundary node identifier Boundary Node field for an IPv4 or IPv6 address.

A data format of IAB TNL Addresses Requested may be expressed as:

| **IE/Group Name** | **Presence** | **IE Type and Reference** | **Semantics Description** |
|---|---|---|---|
| TNL Addresses or Prefixes Requested - All Traffic | ○ | INTEGER (1..256) | The number of TNL addresses/ IPv6 prefixes requested for all traffic. |
| TNL Addresses or Prefixes Requested - F1-C traffic | ○ | INTEGER (1..256) | The number of TNL addresses/IPv6 prefixes requested for F1-C traffic. |
| TNL Addresses or Prefixes Requested - F1-U traffic | ○ | INTEGER (1..256) | The number of TNL addresses/ IPv6 prefixes requested for F1-U traffic. |
| TNL Addresses or Prefixes Requested - Non-F1 traffic | ○ | INTEGER (1..256) | The number of TNL addresses/ IPv6 prefixes requested for non-F1 traffic. |

IAB TNL Addresses Requested includes a request for the number of IP addresses of various traffics.

As the RRC message may only be transmitted by the target donor to the boundary node after handover, the non-F 1-terminating donor does not need to reply the F 1-terminating donor with the IP address configuration information of the non-F1-terminating topology domain.

Therefore, a new information element IAB TNL ADDRESS REQUEST may be introduced into the IAB transport migration management request message to request the IP address of the non-F1-terminating topology domain for the boundary node.

In some embodiments, the method may further include:
2202: the non-F1-terminating donor transmits IP address configuration information to the IAB node. For example, the non-F1-terminating donor generates the entire RRC message RRCReconfiguration, the IP address configuration information of the non-F1-terminating topology domain is carried by RRCReconfiguration and is transmitted to the boundary node. The expression of RRCReconfiguration by using ASN. 1 data format is as described above, which shall not be repeated herein any further.

In some embodiments, the IP address configuration information IAB-IP-AddressConfigurationList-r16 of the non-F1-terminating topology domain carried by RRCReconfiguration includes at least one IP address configuration IAB-IP-AddressConfiguration-r16, each IP address configuration including an IP address index and a corresponding IP address.

It can be seen from the above embodiments that the F1-terminating donor may request the non-F1-terminating donor for allocating the IP address of the non-F1-terminating topology domain, so that the F1-terminating donor requests for the IP address of the non-F1-terminating topology domain, and the non-F1-terminating donor transmits the IP address of the non-F 1-terminating topology domain to the IAB node. Hence, for the routing IDs of the non-F1-terminating topology domain, the IAB node may use the IP address of the non-F1-terminating topology domain.

### II. For dual-connectivity scenario 1

In some embodiments, as shown in FIG. 13, in dual-connectivity scenario 1, the F1-terminating donor is a master node MN of the IAB node, and the non-F1-terminating donor is a secondary node SN of the IAB node. After dual-connectivity is established, a part of traffics of the boundary node may be migrated to the non-F1-terminating topology domain, and a part of traffics are still at the F1-terminating donor topology domain. The IP address of the non-F1-terminating topology domain refers to an IP address anchored at donor-DU2.

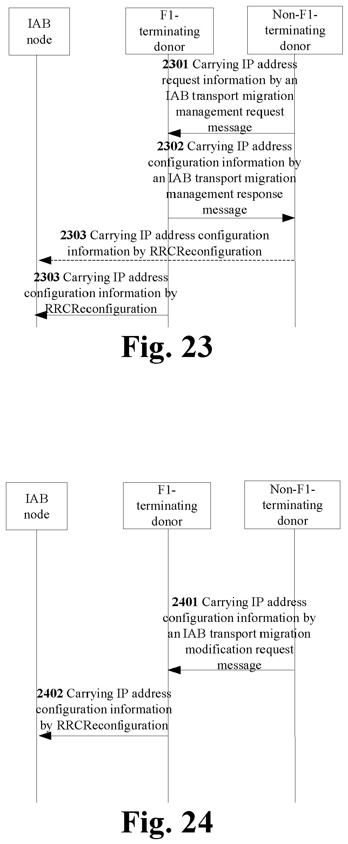

FIG. 23 is a schematic diagram of a transport address configuration method in dual-connectivity scenario 1. As shown in FIG. 23, the method includes:
2301: the F1-terminating donor transmits IP address request information of the non-F 1-terminating topology domain for the IAB node to the non-F 1-terminating donor; and
2302: the F1-terminating donor receives, the IP address configuration information of the non-F1-terminating topology domain allocated for the IAB node transmitted by the non-F1-terminating donor.

In some embodiments, the IP address of the non-F1-terminating topology domain is requested after a process of adding a secondary cell group. The IP address request information is carried by an IAB transport migration management request message, and the IP address configuration information is carried by an IAB transport migration management response message. For example, the IP address request information IAB TNL ADDRESS REQUEST of the non-F1-terminating topology domain is introduced into the IAB transport migration management request message, and the IP address request information further includes a boundary node identifier, which is used to indicate that the IAB node is a boundary node, that is, it indicates that the IP address request information is the IP address request information of the non-F1-terminating topology domain for the boundary node. In a case where the SN does not establish SRB3, the non-F1-terminating donor replies the F1-terminating donor with an IAB transport migration management response message, such as carrying the IP address configuration information (an information element structure IAB TNL Address Response) of the non-F1-terminating topology domain therein, and the IP address configuration information further includes the boundary node identifier. The boundary node identifier is used to indicate that the IAB node is a boundary node, that is, it indicates that the IP address configuration information is the IP address configuration information of the non-F 1-terminating topology domain for the boundary node.

IAB TNL Address Response may be expressed as follows by using ASN. 1 data format:

| **IE/Group Name** | | | **Presence** | **Range** | **IE type and reference** | **Semantics description** |
|---|---|---|---|---|---|---|
| **Boundary Node** | | | **○** | | | |
| **IAB Allocated TNL Address List** | | | | *1* | ENUMERATED (True,...) | |
| | **>IAB Allocated TNL Address Item** | | | *1..<maxno ofTLAsIAB* > | | |
| | | >>IAB TNL Address | M | | 9.2.2.x12 | |
| | | >>IAB TNL Address Usage | ○ | | ENUMERATED (F1-C, F1-U, Non-F1, All, ) | Indicates the usage of the allocated IPv4 or IPv6 address or IPv6 address prefix. |
| | | »Associated Donor DU Address | ○ | | | |

An IP address configuration IAB Allocated TNL Address List domain and a boundary node identifier Boundary Node domain of at least one allocated non-F1-terminating topology domain are included, each IP address configuration including a specific IP address IAB TNL Address and a corresponding donor-DU address Associated Donor DU Address.

Therefore, new information element IP address request information IAB TNL ADDRESS REQUEST may be introduced into the transport migration management request message to request the IP address of the non-F1-terminating topology domain, and an information element IAB TNL Address Response in the IAB transport migration management response message may be used to indicate the IP address of the non-F1-terminating topology domain configured for the boundary node (rather than a child node).

In some embodiments, in the case where the SN does not establish SRB3, the method may further include:
2303: the F1-terminating donor transmits the received IP address configuration information by to the IAB node. For example, the non-F1-terminating donor generates the entire RRC message RRCReconfiguration, the IP address configuration information of the non-F1-terminating topology domain is carried by RRCReconfiguration, and is transmitted to the boundary node. The expression of RRCReconfiguration by using ASN. 1 data format is as described above, which shall not be repeated herein any further.

In 2303, optionally, in the case where the SN establishes SRB3, the non-F1-terminating donor may transmit the IP address configuration information to the IAB node; however, the embodiments of this disclosure are not limited thereto. It can be seen from the above embodiments that the F1-terminating donor needs to request the non-F 1-terminating donor for an IP address, the non-F 1-terminating donor configures and replies to the F1-terminating donor with the IP address of the non-F1-terminating topology domain for the request, and the F1-terminating donor forwards it to the boundary node. Hence, for routing IDs of the non-F 1-terminating topology domain, the IAB node may use the IP address of the non-F1-terminating topology domain.

FIG. 24 is a schematic diagram of a transport address configuration method in dual-connectivity scenario 1. As shown in FIG. 24, the method includes:
2401: the F1-terminating donor receives, the IP address configuration information of the non-F1-terminating topology domain allocated for the IAB node transmitted by the non-F1-terminating donor.

In some embodiments, a difference from FIG. 23 exists that in the case where the SN does not establish SRB3, the F1-terminating donor does not need to actively request for the IP address of the non-F1-terminating topology domain, the non-F1-terminating donor may actively initiate IP address reconfiguration for the non-F1-terminating topology domain, and the IP address configuration information is carried by the IAB transport modification request message (IAB TRANSPORT MODIFIATION REQUEST).

For example, after the process of adding a secondary node, in the case where the SN does not establish SRB3, the non-F 1-terminating donor transmits the IAB transport migration modification request message to the F1-terminating donor, such as carrying the IP address configuration information of the non-F1-terminating topology domain (information element structure IAB TNL Address Response, a specific data format of which being as described above, which shall not be repeated herein any further) therein, also referred to as IP address reconfiguration information, the IP address configuration information also including the boundary node identifier. The boundary node identifier is used to indicate that the IAB node is a boundary node, that is, it indicates that the IP address configuration information is the IP address reconfiguration information of the non-F 1-terminating topology domain for the boundary node. Therefore, the information element IAB TNL Address Response in the IAB migration modification request message may indicate the IP address of the non-F1-terminating topology domain reconfigured for the boundary node (rather than a child node).

In some embodiments, in the case where the SN does not establish SRB3, the method may further include:
2402: the F1-terminating donor forwards the received IP address configuration information to the IAB node. For example, the F1-terminating donor forwards RRCReconfiguration generated by the non-F1-terminating donor, RRCReconfiguration carrying the IP address configuration information of the non-F1-terminating topology domain.

It can be seen from the above embodiments that the F1-terminating donor may receive the IP address configuration information of the non-F1-terminating topology domain actively transmitted by the non-F1-terminating donor, so that the F1-terminating donor may transmit the IP address of the non-F1-terminating topology domain for the IAB node in a case where the non-F1-terminating donor is unable to transmit a message for the IAB node. Hence, for the routing IDs of the non-F1-terminating topology domain, the IAB node may use the IP address of the non-F1-terminating topology domain.

### III. For dual-connectivity scenario 2

In some embodiments, as shown in FIG. 17, in dual-connectivity scenario 2, the F1-terminating donor is a master node SN CU of the IAB node, and the non-F1-terminating donor is a secondary node MN CU of the IAB node. After dual-connectivity is established, a part of traffics of the boundary node may be migrated to the non-F 1-terminating topology domain, and a part of traffics are still at the F1-terminating donor topology domain. The IP address of the non-F1-terminating topology domain refers to an IP address anchored at donor-DU1, and the IP address of the F1-terminating topology domain refers to an IP address anchored at donor-DU2. The IP address of the non-F1-terminating topology domain or the IP address of the F1-terminating topology domain may be requested/configured after the dual-connectivity has been established, which shall be described below respectively.

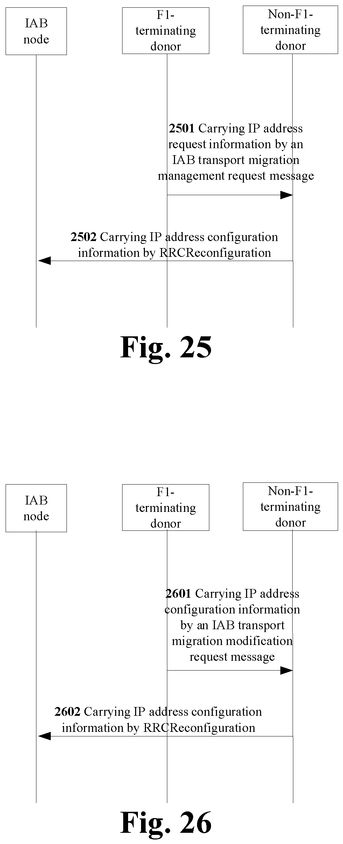

FIG. 25 is a schematic diagram of a transport address configuration method in dual-connectivity scenario 2. As shown in FIG. 25, the method includes:
2501: the F1-terminating donor transmits IP address request information of the non-F 1-terminating topology domain for the IAB node to the non-F 1-terminating donor.

In some embodiments, the IP address of the non-F1-terminating topology domain is requested after the dual-connectivity has been established. The IP address request information is carried by an IAB transport migration management request message (IAB TRANSPORT MIGRATION MANAGEMENT REQUEST). The F1-terminating donor transmits the IAB transport migration management request message to the non-F1-terminating donor, such as introducing the IP address request information IAB TNL ADDRESS REQUEST of the non-F1-terminating topology domain (a specific data format of which being as described above, which shall not be repeated herein any further) therein, the IP address request information also including the boundary node identifier. The boundary node identifier is used to indicate that the IAB node is a boundary node, that is, it indicates that the IP address request information is the IP address request information of the non-F1-terminating topology domain for the boundary node. As the IP address configured by the non-F1-terminating donor may be directly transmitted by the non-F 1-terminating donor to the boundary node via SRB1, the non-F 1-terminating donor does not need to reply the F 1-terminating donor with the IP address configuration information, in other words, the F1-terminating donor does not receive the IP address configuration information transmitted by the F1-terminating donor.

Therefore, a new information element IAB TNL ADDRESS REQUEST may be introduced into the IAB transport migration management request message to request the IP addresses of the non-F1-terminating topology domain.

In some embodiments, the method may further include:
2502: the non-F1-terminating donor transmits the IP address configuration information to the IAB node. For example, the non-F1-terminating donor generates RRCReconfiguration, RRCReconfiguration carries the IP address configuration information IIAB TNL ADDRESS of the non-F1-terminating topology domain, and the IP address configuration information further includes a boundary node identifier. The boundary node identifier is used to indicate that the IAB node is a boundary node, that is, it indicates that the IP address configuration information is the IP address configuration information of the non-F1-terminating topology domain for the boundary node.

It can be seen from the above embodiments that the F1-terminating donor may request the non-F1-terminating donor for allocating the IP address of the non-F 1-terminating topology domain, so that the F 1-terminating donor may request for the IP address of the non-F1-terminating topology domain, and the non-F1-terminating donor transmits the IP address of the non-F 1-terminating topology domain to the IAB node. Hence, for the routing IDs of the non-F1-terminating topology domain, the IAB node may use the IP address of the non-F1-terminating topology domain.

FIG. 26 is a schematic diagram of another transport address configuration method in dual-connectivity scenario 2. As shown in FIG. 26, the method includes:
2601: the F1-terminating donor transmits the IP address configuration information of the F1-terminating topology domain allocated for the IAB node to the non-F1-terminating donor.

In some embodiments, after the dual-connectivity has been established, in the case where the SN does not establish SRB3, the F1-terminating donor does not need to request the IP address of the non-F1-terminating topology domain, the F1-terminating donor may actively initiate IP address reconfiguration for the F1-terminating topology domain, the IP address configuration information is carried by the IAB transport migration management request message, and further includes a boundary node identifier. The boundary node identifier is used to indicate that the IAB node is a boundary node, that is, it indicates that the IP address configuration information is the IP address configuration information of the non-F1-terminating topology domain for the boundary node.

For example, the F1-terminating donor transmits an IAB transport migration management request message to the non-F 1-terminating donor, for example, the IP address configuration information (an information element structure IAB TNL Address Response) of the F1-terminating topology domain is carried therein, and the IP address configuration information further includes the boundary node identifier. The boundary node identifier is used to indicate that the IAB node is a boundary node, that is, it indicates that the IP address configuration information is the IP address configuration information of the non-F1-terminating topology domain for the boundary node, and is also referred to as IP address reconfiguration information. An example of ASN.1 used by IAB TNL Address Response is as described above, which shall not be repeated herein any further.

Therefore, a new information element IAB TNL Address Response may be introduced into the IAB migration management request message to indicate the IP address of the F1-terminating topology domain reconfigured for the boundary node (rather than a child node).

In some embodiments, in the case where the SN does not establish SRB3, the method may further include:
2602: the non-F 1-terminating donor forwards the received IP address configuration information of the non-F 1-terminating topology domain to the IAB node. For example, the non-F 1-terminating donor generates RRCReconfiguration, RRCReconfiguration carrying the IP address configuration information of the F1-terminating topology domain.

It can be seen from the above embodiments that the F1-terminating donor may transmit the IP address configuration information of the F1-terminating topology domain to the non-F1-terminating donor, so that the non-F1-terminating donor may transmit the IP address of the F1-terminating topology domain to the IAB node in a case where the F1-terminating donor is unable to transmit a message to the IAB node. Hence, for the routing IDs of the F1-terminating topology domain, the IAB node may use the IP address of the F1-terminating topology domain.

### IV For an RLF recovery scenario

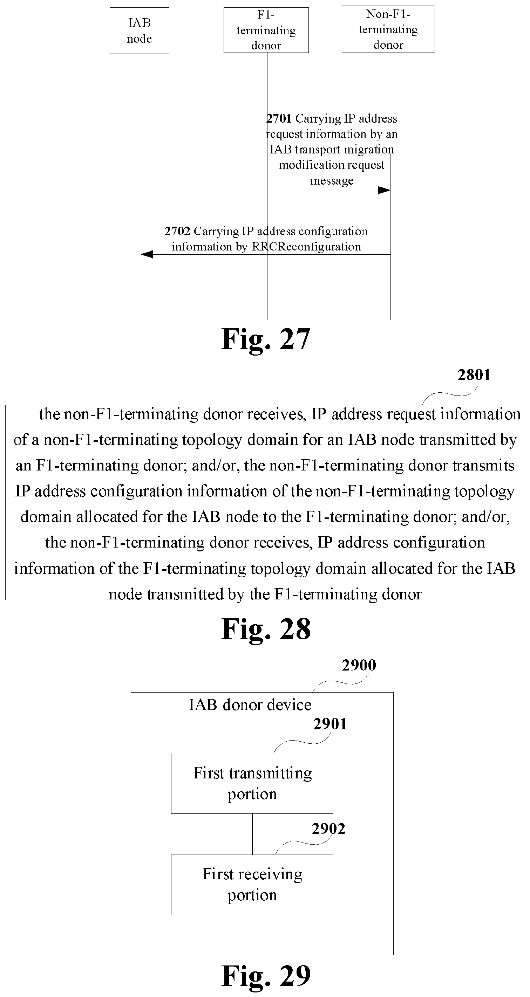

In some embodiments, as shown in FIG. 20, in the RLF recovery scenario, the F1-terminating donor is a donor of the IAB node after RLF recovery (an old donor-CU), and the non-F1-terminating donor is a donor of the IAB node before RLF recovery (a new donor-CU), and the IP address of the non-F1-terminating topology domain refers to the IP address anchored at donor-DU2. FIG. 27 is a schematic diagram of a transport address configuration method in the handover scenario. As shown in FIG. 27, the method includes:
2701: the F1-terminating donor transmits the IP address request information of the non-F1-terminating topology domain for the IAB node to the non-F 1-terminating donor.

In some embodiments, the IP address of the non-F1-terminating topology domain is requested after a UE context retrieve response message is transmitted, and the IP address request information is carried by an IAB transport migration management request message. Therefore, the F1-terminating donor transmits the IAB transport migration management request message to the non-F1-terminating donor, such as introducing the IP address request information IAB TNL ADDRESS REQUEST of the non-F1-terminating topology domain therein, the IP address request information also including the boundary node identifier. The boundary node identifier is used to indicate that the IAB node is a boundary node, that is, it indicates that the IP address request information is the IP address request information of the non-F1-terminating topology domain for the boundary node. As the IP address configuration information can only be transmitted by the non-F1-terminating donor after the boundary node is reestablished to the non-F1-terminating donor, the non-F1-terminating donor does not need to reply the F1-terminating donor with the IP address configuration information of the non-F1-terminating topology domain, in other words, the F1-terminating donor does not receive the IP address configuration information transmitted by the non-F 1-terminating donor.

Hence, a new information element IAB TNL ADDRESS REQUEST may be introduced into the IAB transport migration management request message to request for the IP address of the non-F1-terminating topology domain.

In some embodiments, the method may further include:
2702: the non-F1-terminating donor transmits the IP address configuration information to the IAB node. For example, the non-F1-terminating donor generates RRCReconfiguration, RRCReconfiguration carrying the IP address configuration information of the non-F1-terminating topology domain.

It can be seen from the above embodiments that the F1-terminating donor may request the non-F1-terminating donor for allocating the IP address of the non-F1-terminating topology domain, so that the F1-terminating donor requests for the IP address of the non-F1-terminating topology domain, and the non-F1-terminating donor transmits the IP address of the non-F 1-terminating topology domain to the IAB node. Hence, for the routing IDs of the non-F1-terminating topology domain, the IAB node may use the IP address of the non-F1-terminating topology domain.

The above signaling process only illustrates the embodiments of this disclosure; however, this disclosure is not limited thereto, and reference may be made to relevant techniques for more detailed contents. Furthermore, for example, an order of execution of the operations may be appropriately adjusted, and moreover, some other operations may be added, or some operations therein may be reduced. And appropriate variants may be made by those skilled in the art according to the above contents, without being limited to what is contained in FIGs. 12, 14-16, 18-19 and 21.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It can be seen from the above embodiments that the F1-terminating donor may request the non-F1-terminating donor for allocating the IP address of the non-F1-terminating topology domain, or further receive the IP address configuration information of the non-F1-terminating topology domain allocated by the non-F1-terminating donor for the IAB node, so that the F1-terminating donor may request for the IP address of the non-F1-terminating topology domain, or further transmit the IP address of the non-F1-terminating topology domain for the IAB node, such as in a case where the non-F1-terminating donor is unable to transmit a message for the IAB node. The F1-terminating donor may receive the IP address configuration information of the F1-terminating topology domain actively transmitted by the non-F1-terminating donor, so as to transmit the IP address of the F1-terminating topology domain to the IAB node, such as in a case where the non-F1-terminating donor is unable to transmit a message to the IAB node. Furthermore, the F1-terminating donor may transmit the IP address configuration information of the F1-terminating topology domain to the non-F1-terminating donor, so that the non-F1-terminating donor may transmit the IP address of the F1-terminating topology domain to the IAB node, such as in a case where the F1-terminating donor is unable to transmit a message to the IAB node. Hence, for the routing IDs of the non-F1-terminating topology domain, the IAB node may use the IP address of the non-F1-terminating topology domain, and for the routing IDs of the F1-terminating topology domain, the IAB node may use the IP address of the F1-terminating topology domain.

### Embodiments of a second aspect

The embodiments of this disclosure provide a transport address configuration method, which shall be described from a non-F1-terminating donor, with contents identical to those in the embodiments of the first aspect being not going to be described herein any further.

FIG. 28 is a schematic diagram of a transport address configuration method of the embodiments of this disclosure. As shown in FIG. 28, the method includes:
2801: the non-F1-terminating donor receives, IP address request information of a non-F 1-terminating topology domain for an IAB node transmitted by an F1-terminating donor; and/or,
the non-F1-terminating donor transmits IP address configuration information of the non-F1-terminating topology domain allocated for the IAB node to the F1-terminating donor; and/or,
the non-F1-terminating donor receives, IP address configuration information of the F1-terminating topology domain allocated for the IAB node transmitted by the F1-terminating donor.

In some embodiments, the method may further include (not shown):
the non-F1-terminating donor transmits the IP address configuration information to the IAB node.

In some embodiments, the IP address request information is carried by a first RRC container, the first RRC container including IP address configuration information of the IAB node in the F1-terminating topology domain. For example, the IP address request information is carried by other IAB information message (IABOtherInformation) or an RRC reconfiguration message (RRCReconfiguration) contained in the first RRC container.

In some embodiments, the first RRC container is carried by at least one of the following messages:
a handover request message;
a secondary node addition request message;
a secondary node modification request message;
a secondary node modification required message; or
a UE context retrieve response message.

In some embodiments, the IP address configuration information is carried by a second RRC container. For example, the IP address configuration information is carried by an RRC reconfiguration message (RRCReconfiguration) contained in the second RRC container.

In some embodiments, the second RRC container is carried by at least one of the following messages:
a handover request response message;
a secondary node addition response message;
a secondary node modification response message; or
a secondary node modification required message.

In some embodiments, the F1-terminating donor is a source donor from which the IAB node is handed over, and the non-F1-terminating donor is a target donor to which the IAB node is handed over, and the method includes:
the non-F1-terminating donor receives, IP address request information of the non-F1-terminating topology domain for the IAB node transmitted by the F1-terminating donor, and the non-F1-terminating donor transmits IP address configuration information of the non-F1-terminating topology domain allocated for the IAB node to the F1-terminating donor, the first RRC container being carried by a handover request message, and the second RRC container being carried by a handover request response message.

In some embodiments, the F1-terminating donor is a master node MN of the IAB node, and the non-F1-terminating donor is a secondary node SN of the IAB node, and the method includes:
the non-F1-terminating donor receives, IP address request information of the non-F1-terminating topology domain for the IAB node transmitted by the F1-terminating donor. The first RRC container is carried by a secondary node addition request message or a secondary node modification request message. Furthermore, the non-F1-terminating donor transmits the IP address configuration information of the non-F1-terminating topology domain allocated for the IAB node to the F1-terminating donor, and the second RRC container is carried by a secondary node addition response message or a secondary node modification response message. Optionally, the non-F1-terminating donor further transmits the IP address configuration information to the IAB node.

In some embodiments, the F1-terminating donor is a master node MN of the IAB node, and the non-F1-terminating donor is a secondary node SN of the IAB node, and the method includes:
the non-F1-terminating donor transmits the IP address configuration information of the non-F1-terminating topology domain allocated for the IAB node to the F1-terminating donor, and carrying the second RRC container by a secondary node modification required message.

In some embodiments, the non-F 1-terminating donor is a master node MN of the IAB node, and the F1-terminating donor is a secondary node SN of the IAB node, and the method includes:
the non-F1-terminating donor receives, the IP address request information of the non-F 1-terminating topology domain for the IAB node transmitted by the F 1-terminating donor, the first RRC container being carried by the secondary node modification required message. Optionally, the non-F1-terminating donor further transmits the IP address configuration information to the IAB node.

In some embodiments, the non-F 1-terminating donor is a master node MN of the IAB node, and the F1-terminating donor is a secondary node SN of the IAB node, and the method includes:
the non-F1-terminating donor receives, the IP address configuration information of the F1-terminating topology domain allocated for the boundary node transmitted by the F1-terminating donor, the second RRC container being carried by the secondary node modification required message. Optionally, the non-F1-terminating donor further transmits the IP address configuration information to the IAB node.

In some embodiments, the F1-terminating donor is a donor of the IAB node after RLF recovery, and the non-F1-terminating donor is a donor of the IAB node before RLF recovery, and the method includes:
the non-F1-terminating donor receives, the IP address request information of the non-F 1-terminating topology domain for the IAB node transmitted by the F 1-terminating donor, the first RRC container being carried by a UE context retrieve response message. Optionally, the non-F1-terminating donor further transmits the IP address configuration information to the IAB node.

In some embodiments, the IP address request information is carried by an IAB transport migration management request message, wherein the IP address request information includes a boundary node identifier, the boundary node identifier being used to indicate that the IAB node is a boundary node.

In some embodiments, the IP address configuration information is carried by an IAB transport migration management response message or an IAB transport migration modification request message, and the IP address configuration information includes a boundary node identifier, the boundary node identifier being used to indicate that the IAB node is a boundary node.

In some embodiments, the F1-terminating donor is a source donor from which the IAB node is handed over, and the non-F1-terminating donor is a target donor to which the IAB node is handed over, and the method includes:
the non-F1-terminating donor receives, IP address request information of the non-F1-terminating topology domain for the IAB node transmitted by the F1-terminating donor, the IP address request information being carried by the IAB transport migration management request message. Optionally, the non-F1-terminating donor further transmits the IP address configuration information to the IAB node.

In some embodiments, the non-F 1-terminating donor is a master node MN of the IAB node, and the F1-terminating donor is a secondary node SN of the IAB node, and the method includes:
the non-F1-terminating donor receives, IP address request information of the non-F1-terminating topology domain for the IAB node transmitted by the F1-terminating donor, the IP address request information being carried by the IAB transport migration management request message. Furthermore, the non-F1-terminating donor transmits the IP address configuration information of the non-F1-terminating topology domain allocated for the IAB node to the F1-terminating donor, the IP address configuration information being carried by the IAB transport migration management response message. Optionally, the non-F1-terminating donor further transmits the IP address configuration information to the IAB node.

In some embodiments, the F1-terminating donor is a master node MN of the IAB node, and the non-F1-terminating donor is a secondary node SN of the IAB node, and the method includes:
the non-F1-terminating donor transmits the IP address configuration information of the non-F1-terminating topology domain allocated for the IAB node to the non-F1-terminating donor, the IP address configuration information being carried by the IAB transport migration modification request message.

In some embodiments, the non-F 1-terminating donor is a master node MN of the IAB node, and the F1-terminating donor is a secondary node SN of the IAB node, and the method includes:
the non-F1-terminating donor receives, the IP address request information of the non-F 1-terminating topology domain for the IAB node transmitted by the F1-terminating donor, the IP address request information being carried by the IAB transport migration management request message. Optionally, the non-F1-terminating donor further transmits the IP address configuration information to the IAB node.

In some embodiments, the non-F 1-terminating donor is a master node MN of the IAB node, and the F1-terminating donor is a secondary node SN of the IAB node, and the method includes:
the non-F1-terminating donor receives, the IP address configuration information of the F1-terminating topology domain allocated for the boundary node transmitted by the F1-terminating donor, the IP address configuration information being carried by the IAB transport migration management request message. Optionally, the non-F1-terminating donor further transmits the IP address configuration information to the IAB node.

In some embodiments, the F1-terminating donor is a donor of the IAB node after RLF recovery, and the non-F1-terminating donor is a donor of the IAB node before RLF recovery, and the method includes:
the non-F1-terminating donor receives, IP address request information of the non-F1-terminating topology domain for the IAB node transmitted by the F1-terminating donor, the IP address request information being carried by the IAB transport migration management request message. Optionally, the non-F1-terminating donor further transmits the IP address configuration information to the IAB node.

The above signaling process only illustrates the embodiments of this disclosure; however, this disclosure is not limited thereto, and reference may be made to relevant techniques for more detailed contents. Furthermore, for example, an order of execution of the operations may be appropriately adjusted, and moreover, some other operations may be added, or some operations therein may be reduced. Appropriate variants may be made by those skilled in the art according to the above contents, and a particular signaling process corresponds to what is described in FIGs. 12, 14-16, 18-19 and 21 in the embodiments of the first aspect.

It can be seen from the above embodiments that the F1-terminating donor may request the non-F1-terminating donor for allocating the IP address of the non-F1-terminating topology domain, or further receive the IP address configuration information of the non-F1-terminating topology domain allocated by the non-F1-terminating donor for the IAB node, so that the F1-terminating donor may request for the IP address of the non-F1-terminating topology domain, or further transmit the IP address of the non-F1-terminating topology domain for the IAB node, such as in a case where the non-F1-terminating donor is unable to transmit a message for the IAB node. The F1-terminating donor may receive the IP address configuration information of the F1-terminating topology domain actively transmitted by the non-F1-terminating donor, so as to transmit the IP address of the F1-terminating topology domain to the IAB node, such as in a case where the non-F1-terminating donor is unable to transmit a message to the IAB node. Furthermore, the F1-terminating donor may transmit the IP address configuration information of the F1-terminating topology domain to the non-F1-terminating donor, so that the non-F1-terminating donor may transmit the IP address of the F1-terminating topology domain to the IAB node, such as in a case where the F1-terminating donor is unable to transmit a message to the IAB node. Hence, for the routing IDs of the non-F1-terminating topology domain, the IAB node may use the IP address of the non-F1-terminating topology domain, and for the routing IDs of the F1-terminating topology domain, the IAB node may use the IP address of the F1-terminating topology domain.

### Embodiments of a third aspect

The embodiments of this disclosure provide an IAB-donor device, with contents identical to those in the embodiments of the first aspect being not going to be described herein any further. The device may be, for example, an IAB-donor-CU in an IAB system (such as the first donor-CU or the F 1-terminating donor in the embodiments of the first and second aspects), or may be one or more components or assemblies or modules configured in the IAB-donor-CU or the F 1-terminating donor.

FIG. 29 is a schematic diagram of the IAB-donor device of the embodiments of this disclosure. As shown in FIG. 29, an IAB-donor device 2900 includes:
a first transmitting portion 2901 configured to transmit IP address request information of a non-F1-terminating topology domain for the IAB node to a non-F1-terminating donor, and/or,
transmit IP address configuration information of an F1-terminating topology domain allocated for the IAB node to the non-F1-terminating donor; and/or,
a first receiving portion 2902 configured to receive IP address configuration information of the non-F1-terminating topology domain allocated for the IAB node transmitted by the non-F1-terminating donor.

In some embodiments, the IP address request information is carried by a first RRC container.

In some embodiments, the first RRC container further includes IP address configuration information of the IAB node in the F1-terminating topology domain.

In some embodiments, the IP address request information is carried by other IAB information message (IABOtherInformation) or RRC reconfiguration message (RRCReconfiguration) contained in the first RRC container.

In some embodiments, the first RRC container is carried by at least one of the following messages:
a handover request message;
a secondary node addition request message;
a secondary node modification request message;
a secondary node modification required message; or
a UE context retrieve response message.

In some embodiments, the IP address configuration information is carried by a second RRC container.

In some embodiments, the IP address configuration information is carried by an RRC reconfiguration message (RRCReconfiguration) contained in the second RRC container.

In some embodiments, the second RRC container is carried by at least one of the following messages:
a handover request response message;
a secondary node addition response message;
a secondary node modification response message; or
a secondary node modification required message.

In some embodiments, the F1-terminating donor is a source donor from which the IAB node is handed over, and the non-F1-terminating donor is a target donor to which the IAB node is handed over, the first transmitting portion transmits the IP address request information of the non-F1-terminating topology domain for the IAB node to the non-F 1-terminating donor, and the first receiving portion receives the IP address configuration information of the non-F1-terminating topology domain allocated for the IAB node transmitted by the non-F 1-terminating donor, wherein the first RRC container is carried by a handover request message, and the second RRC container is carried by a handover request response message. Optionally, the first transmitting portion further transmits the IP address configuration information to the IAB node.

In some embodiments, the F 1-terminating donor is a master node MN of the IAB node, and the non-F 1-terminating donor is a secondary node SN of the IAB node, the first transmitting portion transmits IP address request information of the non-F1-terminating topology domain for the IAB node to the non-F 1-terminating donor, wherein the first RRC container is carried by a secondary node addition request message or a secondary node modification request message; and furthermore, the first receiving portion receives the IP address configuration information of the non-F1-terminating topology domain allocated for the IAB node transmitted by the non-F1-terminating donor, wherein the second RRC container is carried by a secondary node addition response message or a secondary node modification response message. Optionally, the first transmitting portion further transmits the IP address configuration information to the IAB node.

In some embodiments, the F 1-terminating donor is a master node MN of the IAB node, and the non-F1-terminating donor is a secondary node SN of the IAB node, and the first receiving portion receives the IP address configuration information of the non-F1-terminating topology domain allocated for the IAB node transmitted by the non-F1-terminating donor, wherein the second RRC container is carried by a secondary node modification required message. Optionally, the first transmitting portion further transmits the IP address configuration information to the IAB node.

In some embodiments, the non-F1-terminating donor is a master node MN of the IAB node, and the F1-terminating donor is a secondary node SN of the IAB node, and the first transmitting portion transmits the IP address request information of the non-F1 -terminating topology domain for the IAB node to the non-F 1-terminating donor, and the first RRC container is carried by the secondary node modification required message.

In some embodiments, the non-F1-terminating donor is a master node MN of the IAB node, and the F1-terminating donor is a secondary node SN of the IAB node, and the first transmitting portion transmits the IP address configuration information of the F1-terminating topology domain allocated for the IAB node to the non-F1-terminating donor, wherein the second RRC container is carried by the secondary node modification required message.

In some embodiments, the F1-terminating donor is a donor of the IAB node after RLF recovery, and the non-F1-terminating donor is a donor of the IAB node before RLF recovery, and the first transmitting portion transmits the IP address request information of the non-F1-terminating topology domain for the IAB node to the non-F1-terminating donor, wherein the first RRC container is carried by the UE context retrieve response message.

In some embodiments, the IP address request information is carried by an IAB transport migration management request message.

In some embodiments, the IP address request information contains a boundary node identifier, the boundary node identifier being used to indicate that the IAB node is a boundary node.

In some embodiments, the IP address configuration information is carried by an IAB transport migration management response message or an IAB transport migration modification request message.

In some embodiments, the IP address configuration information contains a boundary node identifier, the boundary node identifier being used to indicate that the IAB node is a boundary node.

In some embodiments, the F1-terminating donor is a source donor from which the IAB node is initially handed over, and the non-F1-terminating donor is a target donor to which the IAB node is handed over, and the first transmitting portion transmits the IP address request information of the non-F1-terminating topology domain for the IAB node to the non-F1-terminating donor, wherein the IP address request information is carried by an IAB transport migration management request message.

In some embodiments, the F 1-terminating donor is a master node MN of the IAB node, and the non-F1-terminating donor is a secondary node SN of the IAB node, and the first transmitting portion transmits the IP address request information of the non-F1-terminating topology domain for the IAB node to the non-F1-terminating donor, wherein the IP address request information is carried by the IAB transport migration management request message; and furthermore, the first receiving portion receives the IP address configuration information of the non-F1-terminating topology domain allocated for the IAB node transmitted by the non-F 1-terminating donor, wherein the IP address configuration information is carried by the IAB transport migration management response message. Optionally, the first transmitting portion transmits the IP address configuration information to the IAB node.

In some embodiments, the F 1-terminating donor is a master node MN of the IAB node, and the non-F1-terminating donor is a secondary node SN of the IAB node, and the first receiving portion receives the IP address configuration information of the non-F1-terminating topology domain allocated for the IAB node transmitted by the non-F1-terminating donor, wherein the IP address configuration information is carried by the IAB transport migration modification request message. Optionally, the first transmitting portion transmits the IP address configuration information to the IAB node.

In some embodiments, the non-F1-terminating donor is a master node MN of the IAB node, and the F1-terminating donor is a secondary node SN of the IAB node, and the first transmitting portion transmits the IP address request information of the non-F1-terminating topology domain for the IAB node to the non-F1-terminating donor, wherein the IP address request information is carried by the IAB transport migration management request message.

In some embodiments, the non-F1-terminating donor is a master node MN of the IAB node, and the F1-terminating donor is a secondary node SN of the IAB node, and the first transmitting portion transmits the IP address configuration information of the F1-terminating topology domain allocated for the IAB node to the non-F1-terminating donor, wherein the IP address configuration information is carried by the IAB transport migration management request message.

In some embodiments, the F1-terminating donor is a donor of the IAB node after RLF recovery, and the non-F1-terminating donor is a donor of the IAB node before RLF recovery, and the first transmitting portion transmits the IP address request information of the non-F1-terminating topology domain for the IAB node to the non-F1-terminating donor, wherein the IP address request information is carried by the IAB transport migration management request message.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the IAB-donor device 2900 may further include other components or modules, and reference may be made to related techniques for particulars of these components or modules.

Furthermore, for the sake of simplicity, connection relationships between the components or modules or signal profiles thereof are only illustrated in FIG. 29. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

It can be seen from the above embodiments that the F1-terminating donor may request the non-F1-terminating donor for allocating the IP address of the non-F1-terminating topology domain, or further receive the IP address configuration information of the non-F1-terminating topology domain allocated by the non-F1-terminating donor for the IAB node, so that the F1-terminating donor may request for the IP address of the non-F1-terminating topology domain, or further transmit the IP address of the non-F1-terminating topology domain for the IAB node, such as in a case where the non-F1-terminating donor is unable to transmit a message for the IAB node. The F1-terminating donor may receive the IP address configuration information of the F1-terminating topology domain actively transmitted by the non-F1-terminating donor, so as to transmit the IP address of the F1-terminating topology domain to the IAB node, such as in a case where the non-F1-terminating donor is unable to transmit a message to the IAB node. Furthermore, the F1-terminating donor may transmit the IP address configuration information of the F1-terminating topology domain to the non-F1-terminating donor, so that the non-F1-terminating donor may transmit the IP address of the F1-terminating topology domain to the IAB node, such as in a case where the F1-terminating donor is unable to transmit a message to the IAB node. Hence, for the routing IDs of the non-F1-terminating topology domain, the IAB node may use the IP address of the non-F1-terminating topology domain, and for the routing IDs of the F1-terminating topology domain, the IAB node may use the IP address of the F1-terminating topology domain.

### Embodiments of a fourth aspect

The embodiments of this disclosure provide an IAB-donor device, with contents identical to those in the embodiments of the second aspect being not going to be described herein any further. The device may be, for example, an IAB-donor-CU in an IAB system (such as the second donor-CU or the non-F1-terminating donor in the embodiments of the first and second aspects), or may be one or more components or assemblies or modules configured in the IAB-donor-CU or the non-F1-terminating donor.

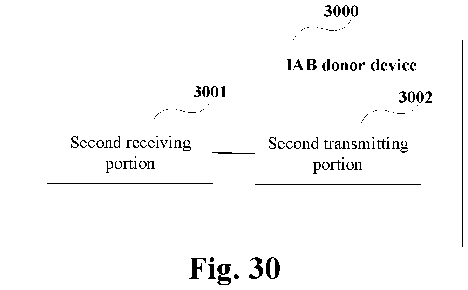

FIG. 30 is a schematic diagram of the IAB-donor device of the embodiments of this disclosure. As shown in FIG. 30, an IAB-donor device 3000 includes:
a second receiving portion 3001 configured to receive IP address request information of a non-F 1-terminating topology domain for the IAB node transmitted by an F 1-terminating donor, and/or,
receive IP address configuration information of an F1-terminating topology domain allocated for the IAB node transmitted by an F1-terminating donor; and/or,
a second transmitting portion 3002 configured to transmit IP address configuration information of the non-F1-terminating topology domain allocated for the IAB node to the F 1-terminating donor.

In some embodiments, the IP address request information is carried by a first RRC container.

In some embodiments, the first RRC container further includes IP address configuration information of the IAB node in the F1-terminating topology domain.

In some embodiments, the IP address request information is carried by other IAB information message (IABOtherInformation) or RRC reconfiguration message (RRCReconfiguration) contained in the first RRC container.

In some embodiments, the first RRC container is carried by at least one of the following messages:
a handover request message;
a secondary node addition request message;
a secondary node modification request message;
a secondary node modification required message; or
a UE context retrieve response message.

In some embodiments, the IP address configuration information is carried by a second RRC container.

In some embodiments, the IP address configuration information is carried by an RRC reconfiguration message (RRCReconfiguration) contained in the second RRC container.

In some embodiments, the second RRC container is carried by at least one of the following messages:
a handover request response message;
a secondary node addition response message;
a secondary node modification response message; or
a secondary node modification required message.

In some embodiments, the F1-terminating donor is a source donor from which the IAB node is handed over, and the non-F1-terminating donor is a target donor to which the IAB node is handed over, the second receiving portion receives the IP address request information of the non-F1-terminating topology domain for the IAB node transmitted by the F 1-terminating donor, and the second transmitting portion transmits the IP address configuration information of the non-F1-terminating topology domain allocated for the IAB node to the F 1-terminating donor, wherein the first RRC container is carried by a handover request message, and the second RRC container is carried by a handover request response message.

In some embodiments, the F 1-terminating donor is a master node MN of the IAB node, and the non-F1-terminating donor is a secondary node SN of the IAB node, and the second receiving portion receives IP address request information of the non-F1-terminating topology domain for the IAB node transmitted by the F 1-terminating donor, wherein the first RRC container is carried by a secondary node addition request message or a secondary node modification request message; and furthermore, the second transmitting portion transmits the IP address configuration information of the non-F1-terminating topology domain allocated for the IAB node to the F1-terminating donor, wherein the second RRC container is carried by a secondary node addition response message or a secondary node modification response message. Optionally, the second transmitting portion further transmits the IP address configuration information to the IAB node.

In some embodiments, the F1-terminating donor is a master node MN of the IAB node, and the non-F1-terminating donor is a secondary node SN of the IAB node, and the second transmitting portion transmits the IP address configuration information of the non-F1-terminating topology domain allocated for the IAB node to the F1-terminating donor, wherein the second RRC container is carried by a secondary node modification required message.

In some embodiments, the non-F1-terminating donor is a master node MN of the IAB node, and the F1-terminating donor is a secondary node SN of the IAB node, and the second receiving portion receives the IP address request information of the non-F 1-terminating topology domain for the IAB node transmitted by the F1-terminating donor, and the first RRC container is carried by the secondary node modification required message. Optionally, the second transmitting portion further transmits the IP address configuration information to the IAB node.

In some embodiments, the non-F1-terminating donor is a master node MN of the IAB node, and the F1-terminating donor is a secondary node SN of the IAB node, and the second receiving portion receives the IP address configuration information of the F1-terminating topology domain allocated for the boundary node transmitted by the F1-terminating donor, wherein the second RRC container is carried by the secondary node modification required message. Optionally, the second transmitting portion further transmits the IP address configuration information to the IAB node.

In some embodiments, the F1-terminating donor is a donor of the IAB node after RLF recovery, and the non-F1-terminating donor is a donor of the IAB node before RLF recovery, and the second receiving portion receives the IP address request information of the non-F1-terminating topology domain for the IAB node transmitted by the F1-terminating donor, wherein the first RRC container is carried by the UE context retrieve response message. Optionally, the second transmitting portion further transmits the IP address configuration information to the IAB node.

In some embodiments, the IP address request information is carried by an IAB transport migration management request message.

In some embodiments, the IP address request information contains a boundary node identifier, the boundary node identifier being used to indicate that the IAB node is a boundary node.

In some embodiments, the IP address configuration information is carried by an IAB transport migration management response message or an IAB transport migration modification request message.

In some embodiments, the IP address configuration information contains a boundary node identifier, the boundary node identifier being used to indicate that the IAB node is a boundary node.

In some embodiments, the F1-terminating donor is a source donor from which the IAB node is initially handed over, and the non-F1-terminating donor is a target donor to which the IAB node is handed over, and the second receiving portion receives the IP address request information of the non-F1-terminating topology domain for the IAB node transmitted by the F1-terminating donor, wherein the IP address request information is carried by an IAB transport migration management request message. Optionally, the second transmitting portion further transmits the IP address configuration information to the IAB node.

In some embodiments, the F1-terminating donor is a master node MN of the IAB node, and the non-F1-terminating donor is a secondary node SN of the IAB node, and the second receiving portion receives the IP address request information of the non-F 1-terminating topology domain for the IAB node transmitted by the F1-terminating donor, wherein the IP address request information is carried by the IAB transport migration management request message; and furthermore, the second transmitting portion transmits the IP address configuration information of the non-F1-terminating topology domain allocated for the IAB node to the F1-terminating donor, wherein the IP address configuration information is carried by the IAB transport migration management response message. Optionally, the second transmitting portion transmits the IP address configuration information to the IAB node.

In some embodiments, the F1-terminating donor is a master node MN of the IAB node, and the non-F1-terminating donor is a secondary node SN of the IAB node, and the second transmitting portion transmits the IP address configuration information of the non-F1-terminating topology domain allocated for the IAB node to the F1-terminating donor, wherein the IP address configuration information is carried by the IAB transport migration modification request message.

In some embodiments, the non-F1-terminating donor is a master node MN of the IAB node, and the F1-terminating donor is a secondary node SN of the IAB node, and the second receiving portion receives the IP address request information of the non-F 1-terminating topology domain for the IAB node transmitted by the F1-terminating donor, wherein the IP address request information is carried by the IAB transport migration management request message. Optionally, the second transmitting portion transmits the IP address configuration information to the IAB node.

In some embodiments, the non-F1-terminating donor is a master node MN of the IAB node, and the F1-terminating donor is a secondary node SN of the IAB node, and the second receiving portion receives the IP address configuration information of the F1-terminating topology domain allocated for the boundary node transmitted by the F1-terminating donor, wherein the IP address configuration information is carried by the IAB transport migration management request message. Optionally, the second transmitting portion transmits the IP address configuration information to the IAB node.

In some embodiments, the F1-terminating donor is a donor of the IAB node after RLF recovery, and the non-F1-terminating donor is a donor of the IAB node before RLF recovery, and the second receiving portion receives the IP address request information of the non-F1-terminating topology domain for the IAB node transmitted by the F1-terminating donor, wherein the IP address request information is carried by the IAB transport migration management request message. Optionally, the second transmitting portion transmits the IP address configuration information to the IAB node.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the IAB-donor device 3000 may further include other components or modules, and reference may be made to related techniques for particulars of these components or modules.

Furthermore, for the sake of simplicity, connection relationships between the components or modules or signal profiles thereof are only illustrated in FIG. 30. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

It can be seen from the above embodiments that the F1-terminating donor may request the non-F1-terminating donor for allocating the IP address of the non-F1-terminating topology domain, or further receive the IP address configuration information of the non-F1-terminating topology domain allocated by the non-F1-terminating donor for the IAB node, so that the F1-terminating donor may request for the IP address of the non-F1-terminating topology domain, or further transmit the IP address of the non-F1-terminating topology domain for the IAB node, such as in a case where the non-F1-terminating donor is unable to transmit a message for the IAB node. The F1-terminating donor may receive the IP address configuration information of the F1-terminating topology domain actively transmitted by the non-F1-terminating donor, so as to transmit the IP address of the F1-terminating topology domain to the IAB node, such as in a case where the non-F1-terminating donor is unable to transmit a message to the IAB node. Furthermore, the F1-terminating donor may transmit the IP address configuration information of the F1-terminating topology domain to the non-F1-terminating donor, so that the non-F1-terminating donor may transmit the IP address of the F1-terminating topology domain to the IAB node, such as in a case where the F1-terminating donor is unable to transmit a message to the IAB node. Hence, for the routing IDs of the non-F1-terminating topology domain, the IAB node may use the IP address of the non-F1-terminating topology domain, and for the routing IDs of the F1-terminating topology domain, the IAB node may use the IP address of the F1-terminating topology domain.

### Embodiments of a fifth aspect

The embodiments of this disclosure provide a communication system, the IAB system including the IAB-donor device 2900 in the embodiments of the third aspect and/or the IAB-donor device 3000 in the embodiments of the fourth aspect, and furthermore, including an IAB node (a boundary node), and reference may be made to related techniques for network architectures of the donor devices and the IAB node, which shall not be described herein any further.

The embodiments of this disclosure further provide an IAB-donor device.

FIG. 9 is a schematic diagram of the IAB-donor device of the embodiments of this disclosure. As shown in FIG. 9, an IAB-donor device 900 may include a processor (such as a central processing unit (CPU)) 901 and a memory 902, the memory 902 being coupled to the processor 901. The memory 902 may store various data, and furthermore, it may store a program 905 for information processing, and execute the program 905 under control of the processor 901.

For example, the processor 901 may be configured to execute a program to carry out the transport address configuration method in the embodiments of the first aspect.

For another example, the processor 901 may be configured to execute a program to carry out the transport address configuration method in the embodiments of the second aspect.

Furthermore, as shown in FIG. 9, the IAB-donor device 900 may include a transceiver 903, and an antenna 904, etc. Functions of the above components are similar to those in the related art, and shall not be described herein any further. It should be noted that the IAB-donor device 900 does not necessarily include all the parts shown in FIG. 9, and furthermore, the IAB-donor device 900 may include parts not shown in FIG. 9, and the related art may be referred to.

Embodiments of this disclosure provide a computer readable program, which, when executed in an IAB-donor device, causes a computer to carry out the transport address configuration method as described in the embodiments of the first to the second aspects in the IAB-donor device.

Embodiments of this disclosure provide a computer storage medium, including a computer readable program, which causes a computer to carry out the transport address configuration method as described in the embodiments of the first to the second aspects in an IAB-donor device.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the spirits and principle of this disclosure, and such variants and modifications fall within the scope of this disclosure.

As to implementations containing the above embodiments, following supplements are further disclosed.

### F1

1. A transport address configuration method, applicable to an F1-terminating donor device of an IAB node, characterized in that the method includes:
transmitting IP address request information of a non-F1-terminating topology domain for the IAB node by the F1-terminating donor to a non-F 1-terminating donor, and/or,
receiving, by the F1-terminating donor, IP address configuration information of the non-F 1-terminating topology domain allocated for the IAB node transmitted by the non-F 1-terminating donor; and/or,
transmitting IP address configuration information of an F1-terminating topology domain allocated for the IAB node by the F1-terminating donor to the non-F1-terminating donor.

2. The method according to supplement 1, wherein the IP address request information is carried by a first RRC container.

3. The method according to supplement 2, wherein the first RRC container further includes IP address configuration information of the IAB node in the F1-terminating topology domain.

4. The method according to supplement 2 or 3, wherein the IP address request information is carried by other IAB information message (IABOtherInformation) or an RRC reconfiguration message contained in the first RRC container.

5. The method according to any one of supplements 2-4, wherein the first RRC container is carried by at least one of the following messages:
a handover request message;
a secondary node addition request message;
a secondary node modification request message;
a secondary node modification required message; or
a UE context retrieve response message.

6. The method according to supplement 1, wherein the IP address configuration information is carried by a second RRC container.

7. The method according to supplement 6, wherein the IP address configuration information is carried by an RRC reconfiguration message (RRCReconfiguration) contained in the second RRC container.

8. The method according to supplement 6 or 7, wherein the second RRC container is carried by at least one of the following messages:
a handover request response message;
a secondary node addition response message;
a secondary node modification response message; or
a secondary node modification required message.

9. The method according to supplement 5 or 8, wherein the F1-terminating donor is a source donor from which the IAB node is handed over, the non-F1-terminating donor is a target donor to which the IAB node is handed over, and the method includes:
transmitting IP address request information of the non-F1-terminating topology domain for the IAB node by the F1-terminating donor to the non-F1-terminating donor; and receiving, by the F1-terminating donor, IP address configuration information of the non-F 1-terminating topology domain allocated for the IAB node transmitted by the non-F 1-terminating donor, wherein the first RRC container is carried by a handover request message, and the second RRC container is carried by a handover request response message.

9.1. The method according to supplement 9, wherein the method further includes:
transmitting the IP address configuration information by the F1-terminating donor to the IAB node.

10. The method according to supplement 5 or 8, wherein the F1-terminating donor is a master node MN of the IAB node, the non-F1-terminating donor is a secondary node SN of the IAB node, and the method includes:
transmitting IP address request information of the non-F1-terminating topology domain for the IAB node by the F1-terminating donor to the non-F1-terminating donor, wherein the first RRC container is carried by a secondary node addition request message or a secondary node modification request message.

10.1. The method according to supplement 10, wherein the method further includes:
receiving, by the F1-terminating donor, the IP address configuration information of the non-F1-terminating topology domain allocated for the IAB node transmitted by the non-F 1-terminating donor, wherein the second RRC container is carried by a secondary node addition response message or a secondary node modification response message.

10.2. The method according to supplement 10 or 10.1, wherein the method further includes:
transmitting the IP address configuration information by the F1-terminating donor to the IAB node.

11. The method according to supplement 5 or 8, wherein the F1-terminating donor is a master node MN of the IAB node, the non-F1-terminating donor is a secondary node SN of the IAB node, and the method includes:
receiving, by the F1-terminating donor, the IP address configuration information of the non-F1-terminating topology domain allocated for the IAB node transmitted by the non-F 1-terminating donor, wherein the second RRC container is carried by a secondary node modification required message.

11.1. The method according to supplement 11, wherein the method further includes:
transmitting the IP address configuration information by the F1-terminating donor to the IAB node.

12. The method according to supplement 5 or 8, wherein the non-F1-terminating donor is a master node MN of the IAB node, the F1-terminating donor is a secondary node SN of the IAB node, and the method includes:
transmitting the IP address request information of the non-F1-terminating topology domain for the IAB node by the F1-terminating donor to the non-F1-terminating donor, wherein the first RRC container is carried by a secondary node modification required message.

13. The method according to supplement 5 or 8, wherein the non-F1-terminating donor is a master node MN of the IAB node, the F1-terminating donor is a secondary node SN of the IAB node, and the method includes:
transmitting the IP address configuration information of the F1-terminating topology domain allocated for the IAB node by the F1-terminating donor to the non-F1-terminating donor, wherein the second RRC container is carried by the secondary node modification required message.

14. The method according to supplement 5 or 8, wherein the F1-terminating donor is a donor of the IAB node after RLF recovery, the non-F1-terminating donor is a donor of the IAB node before RLF recovery, and the method includes:
transmitting the IP address request information of the non-F1-terminating topology domain for the IAB node by the F1-terminating donor to the non-F1-terminating donor, wherein the first RRC container is carried by a UE context retrieve response message.

15. The method according to supplement 1, wherein the IP address request information is carried by an IAB transport migration management request message.

16. The method according to supplement 15, wherein the IP address request information includes a boundary node identifier, the boundary node identifier being used to indicate that the IAB node is a boundary node.

17. The method according to supplement 1, wherein the IP address configuration information is carried by an IAB transport migration management response message or an IAB transport migration modification request message.

18. The method according to supplement 17, wherein the IP address configuration information includes a boundary node identifier, the boundary node identifier being used to indicate that the IAB node is a boundary node.

19. The method according to supplement 15 or 17, wherein the F1-terminating donor is a source donor from which the IAB node is handed over, the non-F1-terminating donor is a target donor to which the IAB node is handed over, and the method includes:
transmitting IP address request information of the non-F1-terminating topology domain for the IAB node by the F1-terminating donor to the non-F1-terminating donor, wherein the IP address request information is carried by an IAB transport migration management request message.

20. The method according to supplement 15 or 17, wherein the F1-terminating donor is a master node MN of the IAB node, the non-F1-terminating donor is a secondary node SN of the IAB node, and the method includes:
transmitting IP address request information of the non-F1-terminating topology domain for the IAB node by the F1-terminating donor to the non-F1-terminating donor, wherein the IP address request information is carried by an IAB transport migration management request message.

20.1. The method according to supplement 20, wherein the method further includes:
receiving, by the F1-terminating donor, IP address configuration information of the non-F 1-terminating topology domain allocated for the IAB node transmitted by the non-F 1-terminating donor, wherein the IP address configuration information is carried by an IAB transport migration management response message.

20.2. The method according to supplement 20.1, wherein the method further includes:
transmitting the IP address configuration information by the F1-terminating donor to the IAB node.

21. The method according to supplement 15 or 17, wherein the F1-terminating donor is a master node MN of the IAB node, the non-F1-terminating donor is a secondary node SN of the IAB node, and the method includes:
receiving, by the F1-terminating donor, the IP address configuration information of the non-F1-terminating topology domain allocated for the IAB node transmitted by the F1-terminating donor, wherein the IP address configuration information is carried by an IAB transport migration modification request message.

21.1. The method according to supplement 21, wherein the method further includes:
transmitting the IP address configuration information by the F1-terminating donor to the IAB node.

22. The method according to supplement 15 or 17, wherein the non-F1-terminating donor is a master node MN of the IAB node, the F1-terminating donor is a secondary node SN of the IAB node, and the method includes:
transmitting the IP address request information of the non-F1-terminating topology domain for the IAB node by the F1-terminating donor to the non-F1-terminating donor, wherein the IP address request information is carried by an IAB transport migration management request message.

23. The method according to supplement 15 or 17, wherein the non-F1-terminating donor is a master node MN of the IAB node, the F1-terminating donor is a secondary node SN of the IAB node, and the method includes:
transmitting the IP address configuration information of the F1-terminating topology domain allocated for the IAB node by the F1-terminating donor to the non-F1-terminating donor, wherein the IP address configuration information is carried by the IAB transport migration management request message.

24. The method according to supplement 15 or 17, wherein the F1-terminating donor is a donor of the IAB node after RLF recovery, the non-F 1-terminating donor is a donor of the IAB node before RLF recovery, and the method includes:
transmitting the IP address request information of the non-F1-terminating topology domain for the IAB node by the F1-terminating donor to the non-F1-terminating donor, wherein the IP address request information is carried by the IAB transport migration management request message.

25. An IAB-donor device, including a memory and a processor, the memory storing a computer program, and the processor being configured to execute the computer program to carry out the transport address configuration method as described in any one of supplements 1-25.

### Non-F1

1. A transport address configuration method, applicable to a non-F1-terminating donor device of an IAB node, characterized in that the method includes:
receiving, by the non-F1-terminating donor, IP address request information of a non-F 1-terminating topology domain for an IAB node transmitted by an F1-terminating donor; and/or,
transmitting IP address configuration information of the non-F1-terminating topology domain allocated for the IAB node by the non-F1-terminating donor to the F1-terminating donor; and/or,
receiving, by the non-F1-terminating donor, IP address configuration information of the F1-terminating topology domain allocated for the IAB node transmitted by the F1-terminating donor.

2. The method according to supplement 1, wherein the IP address request information is carried by a first RRC container.

3. The method according to supplement 2, wherein the first RRC container further includes IP address configuration information of the IAB node in the F1-terminating topology domain.

4. The method according to supplement 2 or 3, wherein the IP address request information is carried by other IAB information message (IABOtherInformation) or an RRC reconfiguration message (RRCReconfiguration) contained in the first RRC container.

5. The method according to any one of supplements 2-4, wherein the first RRC container is carried by at least one of the following messages:
a handover request message;
a secondary node addition request message;
a secondary node modification request message;
a secondary node modification required message; or
a UE context retrieve response message.

6. The method according to supplement 1, wherein the IP address configuration information is carried by a second RRC container.

7. The method according to supplement 6, wherein the IP address configuration information is carried by an RRC reconfiguration message (RRCReconfiguration) contained in the second RRC container.

8. The method according to supplement 6 or 7, wherein the second RRC container is carried by at least one of the following messages:
a handover request response message;
a secondary node addition response message;
a secondary node modification response message; or
a secondary node modification required message.

9. The method according to supplement 5 or 8, wherein the F1-terminating donor is a source donor from which the IAB node is handed over, and the non-F 1-terminating donor is a target donor to which the IAB node is handed over, and the method includes:
receiving, by the non-F1-terminating donor, IP address request information of the non-F 1-terminating topology domain for the IAB node transmitted by the F 1-terminating donor, and transmitting IP address configuration information of the non-F1-terminating topology domain allocated for the IAB node by the non-F1-terminating donor to the F1-terminating donor, wherein the first RRC container is carried by a handover request message, and the second RRC container is carried by a handover request response message.

10. The method according to supplement 5 or 8, wherein the F1-terminating donor is a master node MN of the IAB node, and the non-F 1-terminating donor is a secondary node SN of the IAB node, and the method includes:
receiving, by the non-F1-terminating donor, IP address request information of the non-F 1-terminating topology domain for the IAB node transmitted by the F 1-terminating donor, wherein the first RRC container is carried by a secondary node addition request message or a secondary node modification request message.

10.1. The method according to supplement 10, wherein the method further includes:
transmitting the IP address configuration information of the non-F1-terminating topology domain allocated for the IAB node by the non-F1-terminating donor to the F1-terminating donor, wherein the second RRC container is carried by a secondary node addition response message or a secondary node modification response message.

10.2. The method according to supplement 10 or 10.1, wherein the method further includes:
transmitting the IP address configuration information by the non-F1-terminating donor to the IAB node.

11. The method according to supplement 5 or 8, wherein the F1-terminating donor is a master node MN of the IAB node, and the non-F1-terminating donor is a secondary node SN of the IAB node, and the method includes:
transmitting the IP address configuration information of the non-F1-terminating topology domain allocated for the IAB node by the non-F1-terminating donor to the F1-terminating donor, wherein the second RRC container is carried by a secondary node modification required message.

12. The method according to supplement 5 or 8, wherein the non-F1-terminating donor is a master node MN of the IAB node, and the F1-terminating donor is a secondary node SN of the IAB node, and the method includes:
receiving, by the non-F1-terminating donor, the IP address request information of the non-F1-terminating topology domain for the IAB node transmitted by the F1-terminating donor, wherein the first RRC container is carried by the secondary node modification required message.

12.1. The method according to supplement 12, wherein the method further includes:
transmitting the IP address configuration information by the non-F1-terminating donor to the IAB node.

13. The method according to supplement 5 or 8, wherein the non-F1-terminating donor is a master node MN of the IAB node, and the F1-terminating donor is a secondary node SN of the IAB node, and the method includes:
receiving, by the non-F1-terminating donor, the IP address configuration information of the F1-terminating topology domain allocated for the IAB node transmitted by the F1-terminating donor, wherein the second RRC container is carried by the secondary node modification required message.

13.1. The method according to supplement 13, wherein the method further includes:
transmitting the IP address configuration information by the non-F1-terminating donor to the IAB node.

14. The method according to supplement 5 or 8, wherein the F1-terminating donor is a donor of the IAB node after RLF recovery, and the non-F 1-terminating donor is a donor of the IAB node before RLF recovery, and the method includes:
receiving, by the non-F1-terminating donor, the IP address request information of the non-F1-terminating topology domain for the IAB node transmitted by the F1-terminating donor, wherein the first RRC container is carried by a UE context retrieve response message.

14.1. The method according to supplement 14, wherein the method further includes:
transmitting the IP address configuration information by the non-F1-terminating donor to the IAB node.

15. The method according to supplement 1, wherein the IP address request information is carried by an IAB transport migration management request message.

16. The method according to supplement 15, wherein the IP address request information includes a boundary node identifier, the boundary node identifier being used to indicate that the IAB node is a boundary node.

17. The method according to supplement 1, wherein the IP address configuration information is carried by an IAB transport migration management response message or an IAB transport migration modification request message.

18. The method according to supplement 17, wherein the IP address configuration information includes a boundary node identifier, the boundary node identifier being used to indicate that the IAB node is a boundary node.

19. The method according to supplement 15 or 17, wherein the F1-terminating donor is a source donor from which the IAB node is handed over, and the non-F1-terminating donor is a target donor to which the IAB node is handed over, and the method includes:
receiving, by the non-F1-terminating donor, IP address request information of the non-F 1-terminating topology domain for the IAB node transmitted by the F1-terminating donor, wherein the IP address request information is carried by the IAB transport migration management request message.

19.1. The method according to supplement 19, wherein the method further includes:
transmitting the IP address configuration information by the non-F1-terminating donor to the IAB node.

20. The method according to supplement 15 or 17, wherein the F1-terminating donor is a master node MN of the IAB node, and the non-F1-terminating donor is a secondary node SN of the IAB node, and the method includes:
receiving, by the non-F1-terminating donor, IP address request information of the non-F 1-terminating topology domain for the IAB node transmitted by the F1-terminating donor, wherein the IP address request information is carried by the IAB transport migration management request message.

20.1. The method according to supplement 20, wherein the method further includes:
transmitting the IP address configuration information of the non-F1-terminating topology domain allocated for the IAB node by the non-F1-terminating donor to the F1-terminating donor, wherein the IP address configuration information is carried by the IAB transport migration management response message.

20.2. The method according to supplement 20 or 20.1, wherein the method further includes:
transmitting the IP address configuration information by the non-F1-terminating donor to the IAB node.

21. The method according to supplement 15 or 17, wherein the F1-terminating donor is a master node MN of the IAB node, and the non-F1-terminating donor is a secondary node SN of the IAB node, and the method includes:
transmitting the IP address configuration information of the non-F1-terminating topology domain allocated for the IAB node by the non-F 1-terminating donor to the non-F 1-terminating donor, wherein the IP address configuration information is carried by the IAB transport migration modification request message.

22. The method according to supplement 15 or 17, wherein the non-F1-terminating donor is a master node MN of the IAB node, and the F1-terminating donor is a secondary node SN of the IAB node, and the method includes:
receiving, by the non-F1-terminating donor, the IP address request information of the non-F1-terminating topology domain for the IAB node transmitted by the F1-terminating donor, wherein the IP address request information is carried by the IAB transport migration management request message.

22.1. The method according to supplement 22, wherein the method further includes:
transmitting the IP address configuration information by the non-F1-terminating donor to the IAB node.

23. The method according to supplement 15 or 17, wherein the non-F1-terminating donor is a master node MN of the IAB node, and the F1-terminating donor is a secondary node SN of the IAB node, and the method includes:
receiving, by the non-F1-terminating donor, the IP address configuration information of the F1-terminating topology domain allocated for the IAB node transmitted by the F1-terminating donor, wherein the IP address configuration information being carried by the IAB transport migration management request message.

23.1. The method according to supplement 23, wherein the method further includes:
transmitting the IP address configuration information by the non-F1-terminating donor to the IAB node.

24. The method according to supplement 15 or 17, wherein the F1-terminating donor is a donor of the IAB node after RLF recovery, and the non-F 1-terminating donor is a donor of the IAB node before RLF recovery, and the method includes:
receiving, by the non-F1-terminating donor, IP address request information of the non-F 1-terminating topology domain for the IAB node transmitted by the F1-terminating donor, wherein the IP address request information is carried by the IAB transport migration management request message.

24.1. The method according to supplement 24, wherein the method further includes:
transmitting the IP address configuration information by the non-F1-terminating donor to the IAB node.

25. An IAB-donor device, including a memory and a processor, the memory storing a computer program, and the processor being configured to execute the computer program to carry out the transport address configuration method as described in any one of supplements 1-25.

### F1

1. An IAB-donor device, which is an F1-terminating donor device of an IAB node, characterized in that the device includes:
a first transmitting portion configured to transmit IP address request information of a non-F1-terminating topology domain for the IAB node by the F1-terminating donor to a non-F1-terminating donor, and/or,
transmit IP address configuration information of an F1-terminating topology domain allocated for the IAB node by the F1-terminating donor to the non-F1-terminating donor; and/or,
a first receiving portion configured to receive IP address configuration information of the non-F1-terminating topology domain allocated for the IAB node transmitted by the non-F1-terminating donor.

2. The device according to supplement 1, wherein the IP address request information is carried by a first RRC container.

3. The device according to supplement 2, wherein the first RRC container further includes IP address configuration information of the IAB node in the F1-terminating topology domain.

4. The device according to supplement 2 or 3, wherein the IP address request information is carried by other IAB information message (IABOtherInformation) or an RRC reconfiguration message contained in the first RRC container.

5. The device according to any one of supplements 2-4, wherein the first RRC container is carried by at least one of the following messages:
a handover request message;
a secondary node addition request message;
a secondary node modification request message;
a secondary node modification required message; or
a UE context retrieve response message.

6. The device according to supplement 1, wherein the IP address configuration information is carried by a second RRC container.

7. The device according to supplement 6, wherein the IP address configuration information is carried by an RRC reconfiguration message (RRCReconfiguration) contained in the second RRC container.

8. The device according to supplement 6 or 7, wherein the second RRC container is carried by at least one of the following messages:
a handover request response message;
a secondary node addition response message;
a secondary node modification response message; or
a secondary node modification required message.

9. The device according to supplement 5 or 8, wherein the F1-terminating donor is a source donor from which the IAB node is handed over, the non-F 1-terminating donor is a target donor to which the IAB node is handed over, the first transmitting portion transmits IP address request information of the non-F1-terminating topology domain for the IAB node to the non-F1-terminating donor, and the first receiving portion receives IP address configuration information of the non-F1-terminating topology domain allocated for the IAB node transmitted by the non-F1-terminating donor, wherein the first RRC container is carried by a handover request message, and the second RRC container is carried by a handover request response message.

10. The device according to supplement 5 or 8, wherein the F1-terminating donor is a master node MN of the IAB node, the non-F1-terminating donor is a secondary node SN of the IAB node, and the first transmitting portion transmits IP address request information of the non-F1-terminating topology domain for the IAB node to the non-F1-terminating donor, wherein the first RRC container is carried by a secondary node addition request message or a secondary node modification request message.

10.1. The device according to supplement 10, wherein the first receiving portion further receives the IP address configuration information of the non-F1-terminating topology domain allocated for the IAB node transmitted by the non-F1-terminating donor, wherein the second RRC container is carried by a secondary node addition response message or a secondary node modification response message.

11. The device according to supplement 5 or 8, wherein the F1-terminating donor is a master node MN of the IAB node, the non-F1-terminating donor is a secondary node SN of the IAB node, and the first receiving portion receives the IP address configuration information of the non-F1-terminating topology domain allocated for the IAB node transmitted by the non-F 1-terminating donor, wherein the second RRC container is carried by a secondary node modification required message.

12. The device according to supplement 5 or 8, wherein the non-F1-terminating donor is a master node MN of the IAB node, the F1-terminating donor is a secondary node SN of the IAB node, and the first transmitting portion transmits the IP address request information of the non-F 1-terminating topology domain for the IAB node to the non-F 1-terminating donor, wherein the first RRC container is carried by a secondary node modification required message.

13. The device according to supplement 5 or 8, wherein the non-F1-terminating donor is a master node MN of the IAB node, the F1-terminating donor is a secondary node SN of the IAB node, and the first transmitting portion transmits the IP address configuration information of the F1-terminating topology domain allocated for the IAB node to the non-F1-terminating donor, wherein the second RRC container is carried by the secondary node modification required message.

14. The device according to supplement 5 or 8, wherein the F1-terminating donor is a donor of the IAB node after RLF recovery, the non-F1-terminating donor is a donor of the IAB node before RLF recovery, and the first transmitting portion transmits the IP address request information of the non-F1-terminating topology domain for the IAB node to the non-F1-terminating donor, wherein the first RRC container is carried by a UE context retrieve response message.

15. The device according to supplement 1, wherein the IP address request information is carried by an IAB transport migration management request message.

16. The device according to supplement 15, wherein the IP address request information includes a boundary node identifier, the boundary node identifier being used to indicate that the IAB node is a boundary node.

17. The device according to supplement 1, wherein the IP address configuration information is carried by an IAB transport migration management response message or an IAB transport migration modification request message.

18. The device according to supplement 17, wherein the IP address configuration information includes a boundary node identifier, the boundary node identifier being used to indicate that the IAB node is a boundary node.

19. The device according to supplement 15 or 17, wherein the F1-terminating donor is a source donor from which the IAB node is handed over, the non-F1-terminating donor is a target donor to which the IAB node is handed over, and the first transmitting portion transmits IP address request information of the non-F 1-terminating topology domain for the IAB node to the non-F1-terminating donor, wherein the IP address request information is carried by an IAB transport migration management request message.

20. The device according to supplement 15 or 17, wherein the F1-terminating donor is a master node MN of the IAB node, the non-F1-terminating donor is a secondary node SN of the IAB node, and the first transmitting portion transmits IP address request information of the non-F1-terminating topology domain for the IAB node to the non-F1-terminating donor, wherein the IP address request information is carried by an IAB transport migration management request message.

20.1. The device according to supplement 20, wherein the first receiving portion further receives IP address configuration information of the non-F1-terminating topology domain allocated for the IAB node transmitted by the non-F1-terminating donor, wherein the IP address configuration information is carried by an IAB transport migration management response message.

21. The device according to supplement 15 or 17, wherein the F1-terminating donor is a master node MN of the IAB node, the non-F1-terminating donor is a secondary node SN of the IAB node, and the first receiving portion receives the IP address configuration information of the non-F1-terminating topology domain allocated for the IAB node transmitted by the F1-terminating donor, wherein the IP address configuration information is carried by an IAB transport migration modification request message.

22. The device according to supplement 15 or 17, wherein the non-F1-terminating donor is a master node MN of the IAB node, the F1-terminating donor is a secondary node SN of the IAB node, and the first transmitting portion transmits the IP address request information of the non-F 1-terminating topology domain for the IAB node to the non-F 1-terminating donor, wherein the IP address request information is carried by an IAB transport migration management request message.

23. The device according to supplement 15 or 17, wherein the non-F1-terminating donor is a master node MN of the IAB node, the F1-terminating donor is a secondary node SN of the IAB node, and the first transmitting portion transmits the IP address configuration information of the F1-terminating topology domain allocated for the IAB node to the non-F 1-terminating donor, wherein the IP address configuration information is carried by the IAB transport migration management request message.

24. The device according to supplement 15 or 17, wherein the F1-terminating donor is a donor of the IAB node after RLF recovery, the non-F 1-terminating donor is a donor of the IAB node before RLF recovery, and the first transmitting portion transmits the IP address request information of the non-F1-terminating topology domain for the IAB node to the non-F 1-terminating donor, wherein the IP address request information is carried by the IAB transport migration management request message.

25. The device according to supplement 9 or 10 or 10.1 or 11 or 20 or 20.1 or 21, wherein the first transmitting portion further transmits the IP address configuration information to the IAB node.

### Non-F1

1. An IAB-donor device, which is a non-F1-terminating donor device of an IAB node, characterized in that the device includes:
a second receiving portion configured to receive IP address request information of a non-F1-terminating topology domain for an IAB node transmitted by an F1-terminating donor; and/or,
receive IP address configuration information of the F1-terminating topology domain allocated for the IAB node transmitted by the F1-terminating donor; and/or,
a second transmitting portion configured to transmit IP address configuration information of the non-F1-terminating topology domain allocated for the IAB node to the F1-terminating donor.

2. The device according to supplement 1, wherein the IP address request information is carried by a first RRC container.

3. The device according to supplement 2, wherein the first RRC container further includes IP address configuration information of the IAB node in the F1-terminating topology domain.

4. The device according to supplement 2 or 3, wherein the IP address request information is carried by other IAB information message (IABOtherInformation) or an RRC reconfiguration message (RRCReconfiguration) contained in the first RRC container.

5. The device according to any one of supplements 2-4, wherein the first RRC container is carried by at least one of the following messages:
a handover request message;
a secondary node addition request message;
a secondary node modification request message;
a secondary node modification required message; or
a UE context retrieve response message.

6. The device according to supplement 1, wherein the IP address configuration information is carried by a second RRC container.

7. The device according to supplement 6, wherein the IP address configuration information is carried by an RRC reconfiguration message (RRCReconfiguration) contained in the second RRC container.

8. The device according to supplement 6 or 7, wherein the second RRC container is carried by at least one of the following messages:
a handover request response message;
a secondary node addition response message;
a secondary node modification response message; or
a secondary node modification required message.

9. The device according to supplement 5 or 8, wherein the F1-terminating donor is a source donor from which the IAB node is handed over, and the non-F 1-terminating donor is a target donor to which the IAB node is handed over, and the second receiving portion receives IP address request information of the non-F1-terminating topology domain for the IAB node transmitted by the F1-terminating donor, and the second transmitting portion transmits IP address configuration information of the non-F1-terminating topology domain allocated for the IAB node to the F1-terminating donor, wherein the first RRC container is carried by a handover request message, and the second RRC container is carried by a handover request response message.

10. The device according to supplement 5 or 8, wherein the F1-terminating donor is a master node MN of the IAB node, and the non-F1-terminating donor is a secondary node SN of the IAB node, and the second receiving portion receives IP address request information of the non-F1-terminating topology domain for the IAB node transmitted by the F1-terminating donor, wherein the first RRC container is carried by a secondary node addition request message or a secondary node modification request message.

10.1. The device according to supplement 10, wherein the second transmitting portion further transmits the IP address configuration information of the non-F 1-terminating topology domain allocated for the IAB node to the F1-terminating donor, wherein the second RRC container is carried by a secondary node addition response message or a secondary node modification response message.

11. The device according to supplement 5 or 8, wherein the F1-terminating donor is a master node MN of the IAB node, the non-F1-terminating donor is a secondary node SN of the IAB node, and the second transmitting portion transmits the IP address configuration information of the non-F1-terminating topology domain allocated for the IAB node to the F1-terminating donor, wherein the second RRC container is carried by a secondary node modification required message.

12. The device according to supplement 5 or 8, wherein the non-F1-terminating donor is a master node MN of the IAB node, the F1-terminating donor is a secondary node SN of the IAB node, and the second receiving portion receives the IP address request information of the non-F1-terminating topology domain for the IAB node transmitted by the F1-terminating donor, wherein the first RRC container is carried by the secondary node modification required message.

13. The device according to supplement 5 or 8, wherein the non-F1-terminating donor is a master node MN of the IAB node, and the F1-terminating donor is a secondary node SN of the IAB node, and the second receiving portion receives the IP address configuration information of the F1-terminating topology domain allocated for the IAB node transmitted by the F1-terminating donor, wherein the second RRC container is carried by the secondary node modification required message.

14. The device according to supplement 5 or 8, wherein the F1-terminating donor is a donor of the IAB node after RLF recovery, the non-F1-terminating donor is a donor of the IAB node before RLF recovery, and the second receiving portion receives the IP address request information of the non-F1-terminating topology domain for the IAB node transmitted by the F1-terminating donor, wherein the first RRC container is carried by a UE context retrieve response message.

15. The device according to supplement 1, wherein the IP address request information is carried by an IAB transport migration management request message.

16. The device according to supplement 15, wherein the IP address request information includes a boundary node identifier, the boundary node identifier being used to indicate that the IAB node is a boundary node.

17. The device according to supplement 1, wherein the IP address configuration information is carried by an IAB transport migration management response message or an IAB transport migration modification request message.

18. The device according to supplement 17, wherein the IP address configuration information includes a boundary node identifier, the boundary node identifier being used to indicate that the IAB node is a boundary node.

19. The device according to supplement 15 or 17, wherein the F1-terminating donor is a source donor from which the IAB node is handed over, the non-F1-terminating donor is a target donor to which the IAB node is handed over, and the second receiving portion receives IP address request information of the non-F1-terminating topology domain for the IAB node transmitted by the F1-terminating donor, wherein the IP address request information is carried by the IAB transport migration management request message.

20. The device according to supplement 15 or 17, wherein the F1-terminating donor is a master node MN of the IAB node, the non-F1-terminating donor is a secondary node SN of the IAB node, and the second receiving portion receives IP address request information of the non-F1-terminating topology domain for the IAB node transmitted by the F1-terminating donor, wherein the IP address request information is carried by the IAB transport migration management request message.

20.1. The device according to supplement 20, wherein the second transmitting portion further transmits the IP address configuration information of the non-F 1-terminating topology domain allocated for the IAB node to the F1-terminating donor, wherein the IP address configuration information is carried by the IAB transport migration management response message.

21. The device according to supplement 15 or 17, wherein the F1-terminating donor is a master node MN of the IAB node, the non-F1-terminating donor is a secondary node SN of the IAB node, and the second transmitting portion transmits the IP address configuration information of the non-F1-terminating topology domain allocated for the IAB node to the non-F1-terminating donor, wherein the IP address configuration information is carried by the IAB transport migration modification request message.

22. The device according to supplement 15 or 17, wherein the non-F1-terminating donor is a master node MN of the IAB node, the F1-terminating donor is a secondary node SN of the IAB node, and the second receiving portion receives the IP address request information of the non-F1-terminating topology domain for the IAB node transmitted by the F1-terminating donor, wherein the IP address request information is carried by the IAB transport migration management request message.

23. The device according to supplement 15 or 17, wherein the non-F1-terminating donor is a master node MN of the IAB node, the F1-terminating donor is a secondary node SN of the IAB node, and the second receiving portion receives the IP address configuration information of the F1-terminating topology domain allocated for the IAB node transmitted by the F1-terminating donor, wherein the IP address configuration information being carried by the IAB transport migration management request message.

24. The device according to supplement 15 or 17, wherein the F1-terminating donor is a donor of the IAB node after RLF recovery, the non-F 1-terminating donor is a donor of the IAB node before RLF recovery, and the second receiving portion receives IP address request information of the non-F1-terminating topology domain for the IAB node transmitted by the F1-terminating donor, wherein the IP address request information is carried by the IAB transport migration management request message.

25. The device according to supplement 10 or 10.1 or 12 or 13 or 4 or 19 or 20 or 20.1 or 22 or 23 or 24, wherein the second transmitting portion further transmits the IP address configuration information to the IAB node.

## Claims

1. An integrated access and backhaul IAB donor device, which is an F1-terminating donor device of an IAB node, **characterized in that** the device comprises:
a first transmitting portion configured to transmit IP address request information of a non-F 1-terminating topology domain for the IAB node to a non-F 1-terminating donor, and/or,
transmit IP address configuration information of an F1-terminating topology domain allocated for the IAB node to the non-F 1-terminating donor; and/or,
a first receiving portion configured to receive IP address configuration information of the non-F1-terminating topology domain allocated for the IAB node transmitted by the non-F1-terminating donor.

2. The device according to claim 1, wherein the IP address request information is carried by a first RRC container.

3. The device according to claim 2, wherein the first RRC container further comprises IP address configuration information of the IAB node in the F1-terminating topology domain.

4. The device according to claim 2 or 3, wherein the IP address request information is carried by other IAB information message (IABOtherInformation) or RRC reconfiguration message (RRCReconfiguration) contained in the first RRC container.

5. The device according to claim 1, wherein the IP address configuration information is carried by a second RRC container.

6. The device according to claim 5, wherein the IP address configuration information is carried by an RRC reconfiguration message (RRCReconfiguration) contained in the second RRC container.

7. The device according to claim 3 or 6, wherein the first RRC container is carried by at least one of the following messages:
a handover request message;
a secondary node addition request message;
a secondary node modification request message;
a secondary node modification required message; or
a UE context retrieve response message;
and wherein the second RRC container is carried by at least one of the following messages:
a handover request response message;
a secondary node addition response message;
a secondary node modification response message; or
a secondary node modification required message.

8. The device according to claim 7, wherein the F1-terminating donor is a source donor from which the IAB node is handed over, and the non-F1-terminating donor is a target donor to which the IAB node is handed over;
and the first transmitting portion transmits the IP address request information of the non-F 1-terminating topology domain for the IAB node to the non-F 1-terminating donor, and the first receiving portion receives the IP address configuration information of the non-F 1-terminating topology domain allocated for the IAB node transmitted by the non-F 1-terminating donor;
wherein the first RRC container is carried by a handover request message, and the second RRC container is carried by a handover request response message.

9. The device according to claim 7, wherein the F1-terminating donor is a master node MN of the IAB node, and the non-F1-terminating donor is a secondary node SN of the IAB node,
the first transmitting portion transmits IP address request information of the non-F1-terminating topology domain for the IAB node to the non-F1-terminating donor, wherein the first RRC container is carried by a secondary node addition request message or a secondary node modification request message, or,
the first receiving portion receives the IP address configuration information of the non-F 1-terminating topology domain allocated for the IAB node transmitted by the non-F 1-terminating donor, wherein the second RRC container is carried by a secondary node addition response message or a secondary node modification response message; or,
the first receiving portion receives the IP address configuration information of the non-F 1-terminating topology domain allocated for the IAB node transmitted by the non-F 1-terminating donor, wherein the second RRC container is carried by a secondary node modification required message.

10. The device according to claim 7, wherein the non-F1-terminating donor is a master node MN of the IAB node, and the F1-terminating donor is a secondary node SN of the IAB node,
and the first transmitting portion transmits the IP address request information of the non-F 1-terminating topology domain for the IAB node to the non-F 1-terminating donor, and the first RRC container is carried by the secondary node modification required message, or,
the first transmitting portion transmits the IP address configuration information of the F1-terminating topology domain allocated for the IAB node to the non-F 1-terminating donor, wherein the second RRC container is carried by the secondary node modification required message.

11. The device according to claim 7, wherein the F1-terminating donor is a donor of the IAB node after RLF recovery, and the non-F1-terminating donor is a donor of the IAB node before RLF recovery;
and the first transmitting portion transmits the IP address request information of the non-F 1-terminating topology domain for the IAB node to the non-F 1-terminating donor, wherein the first RRC container is carried by the UE context retrieve response message.

12. The device according to claim 1, wherein the IP address request information is carried by an IAB transport migration management request message, and the IP address configuration information is carried by an IAB transport migration management response message or an IAB transport migration modification request message.

13. The device according to claim 12, wherein the IP address request information contains a boundary node identifier, the boundary node identifier being used to indicate that the IAB node is a boundary node; or, the IP address configuration information contains a boundary node identifier, the boundary node identifier being used to indicate that the IAB node is a boundary node.

14. The device according to claim 12, wherein the F1-terminating donor is a source donor from which the IAB node is initially handed over, and the non-F 1-terminating donor is a target donor to which the IAB node is handed over;
the first transmitting portion transmits the IP address request information of the non-F 1-terminating topology domain for the IAB node to the non-F 1-terminating donor, wherein the IP address request information is carried by an IAB transport migration management request message.

15. The device according to claim 12, wherein the F1-terminating donor is a master node MN of the IAB node, and the non-F1-terminating donor is a secondary node SN of the IAB node,
and the first transmitting portion transmits the IP address request information of the non-F1-terminating topology domain for the IAB node to the non-F 1-terminating donor, wherein the IP address request information is carried by the IAB transport migration management request message; or,
the first receiving portion receives the IP address configuration information of the non-F 1-terminating topology domain allocated for the IAB node transmitted by the non-F 1-terminating donor, wherein the IP address configuration information is carried by the IAB transport migration management response message; or,
the first receiving portion receives the IP address configuration information of the non-F 1-terminating topology domain allocated for the IAB node transmitted by the non-F 1-terminating donor, wherein the IP address configuration information is carried by the IAB transport migration modification request message.

16. The device according to claim 12, wherein the non-F1-terminating donor is a master node MN of the IAB node, and the F1-terminating donor is a secondary node SN of the IAB node,
and the first transmitting portion transmits the IP address request information of the non-F 1-terminating topology domain for the IAB node to the non-F1-terminating donor, wherein the IP address request information is carried by the IAB transport migration management request message, or,
the first transmitting portion transmits the IP address configuration information of the F1-terminating topology domain allocated for the IAB node to the non-F 1-terminating donor, wherein the IP address configuration information is carried by the IAB transport migration management request message.

17. The device according to claim 12, wherein the F1-terminating donor is a donor of the IAB node after RLF recovery, and the non-F 1-terminating donor is a donor of the IAB node before RLF recovery,
and the first transmitting portion transmits the IP address request information of the non-F 1-terminating topology domain for the IAB node to the non-F 1-terminating donor, wherein the IP address request information is carried by the IAB transport migration management request message.

18. The device according to claim 1, wherein the first transmitting portion further transmits the IP address configuration information to the IAB node.

19. An integrated access and backhaul IAB donor device, which is a non-F1-terminating donor device of an IAB node, **characterized in that** the device comprises:
a second receiving portion configured to receive IP address request information of a non-F 1-terminating topology domain for the IAB node transmitted by an F 1-terminating donor, and/or,
receive IP address configuration information of an F1-terminating topology domain allocated for the IAB node transmitted by an F1-terminating donor; and/or,
a second transmitting portion configured to transmit IP address configuration information of the non-F1-terminating topology domain allocated for the IAB node to the F 1-terminating donor.

20. A communication system, comprising the device as claimed in claim 1 and/or the device as claimed in claim 19.
